# EUROPÄISCHE PATENTSCHRIFT

(11) **EP 3 593 434 B1**
(45) Veröffentlichungstag und Bekanntmachung des Hinweises auf die Patenterteilung: **12.10.2022**
(21) Anmeldenummer: 17721581.1
(22) Anmeldetag: 26.04.2017
(51) Int. Cl.: H02J 3/36, H02H 3/08, H02H 3/087, H02H 3/093, H02H 3/18, H02H 3/24, H02H 3/247, H02H 3/44, H02H 7/26, H02H 3/10

(54) **VERFAHREN UND ANORDNUNG ZUM ERZEUGEN EINES AUSLÖSESIGNALS FÜR EINEN HVDC-SCHALTER**
METHOD AND ASSEMBLY FOR GENERATING AN ACTIVATING SIGNAL FOR AN HVDC BREAKER
PROCÉDÉ ET AGENCEMENT POUR PRODUIRE UN SIGNAL DE DÉCLENCHEMENT POUR UN INTERRUPTEUR CCHT

(43) Veröffentlichungstag der Anmeldung: 15.01.2020
(73) Patentinhaber: Siemens Energy Global GmbH & Co. KG, 81739 München (DE)
(72) Erfinder: ERGIN, Dominik, 91083 Baiersdorf (DE); PETINO, Cora, 95447 Bayreuth (DE); STUMPE, Maximilian, 52080 Aachen (DE); TÜNNERHOFF, Philipp Christian, 52070 Aachen (DE)
(86) Internationale Anmeldenummer: PCT/EP2017/059897
(87) Internationale Veröffentlichungsnummer: WO 2018/196964

(56) Entgegenhaltungen:
- WO-A1-2011/157305
- WO-A1-2016/026524
- GB-A- 2 537 850

## Beschreibung

Die Erfindung betrifft ein Verfahren und eine Anordnung zum Erzeugen eines Auslösesignals für einen Gleichstromleistungsschalter, der zwischen eine Hochspannungsgleichstromquelle und eine Hochspannungsgleichstromübertragungsleitung geschaltet ist.

Zur Übertragung von elektrischer Energie über weite Strecken ist die Hochspannungsgleichstromübertragung (HGÜ) besonders gut geeignet, da dabei vergleichsweise geringe elektrische Verluste auftreten. Ein einfaches Hochspannungsgleichstromübertragungssystem {HGÜ-System) weist zwei Hochspannungsgleichstromübertragungsstationen (HGÜ-Stationen) auf, welche mittels einer Hochspannungsgleichstromübertragungsleitung (HGÜ-Leitung) elektrisch verbunden sind. Komplexer sind sogenannte Multi-Terminal-HGÜ-Systeme (HGÜ-Netze). Multi-Terminal-HGÜ-Systeme weisen mehr als zwei HGÜ-Stationen auf, welche untereinander über eine Mehrzahl von HGÜ-Leitungen elektrisch verbunden sind.

Wenn während der Energieübertragung an einer HGÜ-Leitung ein elektrischer Fehler auftritt (beispielsweise ein Kurzschluss, der zur Ausbildung eines Lichtbogens führt), dann muss dieser Fehler zuverlässig erkannt werden, damit daraufhin geeignete Schutzmaßnahmen ergriffen werden können. Sowohl in einfachen HGÜ-Systemen als auch in Multi-Terminal-HGÜ-Systemen müssen solche Fehler an den HGÜ-Leitungen erkannt und entsprechend geklärt werden. Dazu sind folgende Ansätze vorstellbar.

Ein erster bekannter Ansatz besteht darin, nach Erkennen eines Fehlers einen Wechselstrom-Leistungsschalter in einem an das HGÜ-System angeschlossenen Wechselstromnetz zu öffnen und damit die Energiezufuhr zu dem HGÜ-System zu unterbrechen. Dieses Schutzkonzept hat den Nachteil, dass das gesamte HGÜ-System zur Fehlerklärung abgeschaltet werden muss und erneute Startvorgänge der HGÜ-Stationen notwendig sind. Wenn die HGÜ-Stationen modulare Multilevelstromrichter aufweisen, dann müssen die Energiespeicher der Module neu aufgeladen werden, was die Wiederaufnahme der Energieübertragung nach der Fehlerklärung signifikant verzögert.

Ein weiterer bekannter Ansatz besteht darin, Wanderwellen auszuwerten, die bei Auftreten eines Fehlers an der HGÜ-Leitung entstehen. Solche wanderwellenbasierte Schutzkonzepte arbeiten relativ langsam und verzögern die Fehlererkennung. Außerdem stellen sie höhere Anforderungen an die Komponenten hinsichtlich der Kurzschlussfestigkeit. Ein Einsatz von diskreten Induktivitäten würde zwar eine Begrenzung des Fehlerstromanstieges ermöglichen, allerdings würde mit der Begrenzung des Stromanstiegs eine Beeinträchtigung der Regelungsdynamik der Stromrichter in den HGÜ-Stationen einhergehen. Außerdem stellt die Auswertung der Wanderwellen hohe Anforderungen an die Messtechnik.

Der Einsatz eines Leitungsdifferentialschutzes könnte eine weitere Möglichkeit zur selektiven Fehlerklärung sein. Dabei werden an den Enden einer HGÜ-Leitung die fließenden Ströme gemessen und miteinander verglichen. Sobald die Differenz zwischen den beiden gemessenen Gleichströmen einen Schwellwert überschreitet, wird die Leitung abgeschaltet. Allerdings erfordert dieses Konzept den Einsatz einer schnellen Kommunikationsinfrastruktur, wobei die Signallaufzeiten des Kommunikationsmediums ebenfalls die Fehlererkennung verzögern.

Diese beschriebenen Ansätze benötigen also entweder zusätzliche aufwendige Komponenten, sind langsam oder ermöglichen keine selektive Klärung von Fehlern an der HGÜ-Leitung. Diese Nachteile kommen insbesondere bei Multi-Terminal-HGÜ-Systemen mit modularen Multilevel-Stromrichtern zu Tragen.

Aus der internationalen Patentanmeldung WO 2011/157305 A1 ist ein Fehlerschutz für eine Hochspannungsgleichstromübertragungsleitung bekannt. Dabei ist die Hochspannungsgleichstromübertragungsleitung mittels eines Gleichstromleistungsschalters abschaltbar. Als Indikator für einen Fehler dient dabei ein schneller Stromanstieg und ein gleichzeitiger plötzlicher Spannungseinbruch.

Die Patentanmeldung GB 2 537 850 A offenbart eine bipolare Hochspannungsgleichstromübertragungsanlage. Wechselstromseitig der Stromrichter dieser Anlage sind dabei Wechselstrom-leistungsschalter angeordnet. Zur Fehlererkennung können dabei verschiedene Größen überwacht werden, beispielsweise die Richtung des Stroms in einem Erd-Rückleiter oder Spannungsprofile der Stromrichter im geblockten Zustand.

Der Erfindung liegt die Aufgabe zugrunde, ein Verfahren und eine Anordnung anzugeben, mit denen einfach und schnell bei Vorliegen eines Fehlers ein Auslösesignal (Öffnungssignal) für einen Leistungsschalter erzeugt werden kann, mit welchem im Fehlerfall die Energieübertragung zum Fehlerort reduziert werden kann.

Diese Aufgabe wird erfindungsgemäß gelöst durch ein Verfahren und eine Anordnung nach den unabhängigen Patentansprüchen. Vorteilhafte Ausführungsformen des Verfahrens und der Anordnung sind in den abhängigen Patentansprüchen angegeben.

Offenbart wird ein Verfahren zum Erzeugen eines Auslösesignals für einen (leistungselektronischen) Gleichstromleistungsschalter, der zwischen eine Hochspannungsgleichstromquelle und eine Hochspannungsgleichstromübertragungsleitung (eines Hochspannungsgleichstromübertragungsnetzes) geschaltet ist, wobei bei dem Verfahren
- eine an einem (einzigen) Spannungsmessort an der Hochspannungsgleichstromübertragungsleitung anliegende Spannung unter Gewinnung von Gleichspannungsmesswerten gemessen wird,
- ein an einem (einzigen) Strommessort durch die Hochspannungsgleichstromübertragungsleitung fließender Strom unter Gewinnung von Gleichstrommesswerten gemessen wird, und
- durch Auswertung (ausschließlich) der Gleichspannungsmesswerte und der Gleichstrommesswerte ein an (einem Fehlerort) der Hochspannungsgleichstromübertragungsleitung vorliegender Fehler (, insbesondere ein an der Hochspannungsgleichstromübertragungsleitung vorliegender Kurzschluss und/oder Lichtbogen,) erkannt wird und daraufhin ein Auslösesignal für den Gleichstromleistungsschalter erzeugt wird. Bei diesem Verfahren ist besonders vorteilhaft, dass lediglich durch Auswertung von Gleichspannungsmesswerten und Gleichstrommesswerten der Fehler erkannt werden kann und daraufhin das Auslösesignal erzeugt werden kann. Aufgrund des Auslösesignals wird der Gleichstromleistungsschalter geöffnet, wodurch der Stromfluss von der Hochspannungsgleichstromquelle in die Hochspannungsgleichstromübertragungsleitung unterbrochen wird. Dadurch wird der in der Hochspannungsgleichstromübertragungsleitung fließende Fehlerstrom verringert oder völlig abgeschaltet. Da lediglich die an dem Spannungsmessort gemessenen Gleichspannungsmesswerte und die an dem Strommessort gemessenen Gleichstrommesswerte ausgewertet werden müssen, ergibt sich ein sehr einfaches Verfahren zum Erzeugen des Auslösesignals. Auf das Auslösesignal hin wird also durch den Gleichstromleistungsschalter der Stromfluss zwischen der Hochspannungsgleichstromquelle und dem Fehlerort an der Hochspannungsgleichstromübertragungsleitung unterbrochen. Der zum Fehlerort (Fehlerstelle) fließende Strom wird abgeschaltet. Die Hochspannungsgleichstromquelle kann beispielsweise eine Hochspannungsgleichstromübertragungsstation (Stromrichter) oder ein Netzknoten eines Hochspannungsgleichstromübertragungsnetzes bzw. -systems sein.

Das Verfahren kann so ablaufen, dass das Auslösesignal für den Gleichstromleistungsschalter erzeugt wird,
- wenn innerhalb einer vorbestimmten ersten Zeitspanne die Gleichspannungsmesswerte einen vorbestimmten ersten Spannungsschwellwert unterschreiten und die Gleichstrommesswerte einen vorbestimmten ersten Stromschwellwert überschreiten.

Das Verfahren läuft so ab, dass das Auslösesignal für den Gleichstromleistungsschalter erzeugt wird,
- wenn innerhalb einer vorbestimmten zweiten Zeitspanne die Gleichspannungsmesswerte einen vorbestimmten zweiten Spannungsschwellwert unterschreiten und die Gleichstrommesswerte ihr Vorzeichen ändern (weil der gemessene (Gleich-)Strom eine Stromrichtungsumkehr aufweist), oder
- wenn innerhalb der vorbestimmten zweiten Zeitspanne die Gleichspannungsmesswerte den vorbestimmten zweiten Spannungsschwellwert unterschreiten, die Gleichstrommesswerte ihr Vorzeichen ändern (weil der gemessene (Gleich-)Strom eine Stromrichtungsumkehr aufweist) und der Betrag der zeitlichen Änderung der Gleichstrommesswerte einen vorbestimmten ersten Stromänderungsschwellwert überschreitet.
Bei diesem Verfahren sind in einer Oder-Verknüpfung drei unterschiedliche Charakteristiken bzw. Kriterien der Gleichspannungsmesswerte und/oder der Gleichstrommesswerte angegeben. Sobald eine der drei Charakteristiken erkannt wird bzw. eines der drei Kriterien erfüllt ist, wird das Auslösesignal erzeugt. Dieses Verfahren ist besonders sicher, weil mehrere Charakteristiken/Kriterien geprüft werden, um einen Fehler an der Hochspannungsgleichstromübertragungsleitung zu erkennen.

Damit ergibt sich ein Verfahren zum Erzeugen eines Auslösesignals für einen (leistungselektronischen) Gleichstromleistungsschalter, der zwischen eine Hochspannungsgleichstromquelle und eine Hochspannungsgleichstromübertragungsleitung (eines Hochspannungsgleichstromübertragungsnetzes) geschaltet ist, wobei bei dem Verfahren
- eine an einem (einzigen) Spannungsmessort an der Hochspannungsgleichstromübertragungsleitung anliegende Spannung unter Gewinnung von Gleichspannungsmesswerten gemessen wird,
- ein an einem (einzigen) Strommessort durch die Hochspannungsgleichstromübertragungsleitung fließender Strom unter Gewinnung von Gleichstrommesswerten gemessen wird, und
- ein Auslösesignal für den Gleichstromleistungsschalter erzeugt wird,
   - wenn innerhalb einer vorbestimmten ersten Zeitspanne die Gleichspannungsmesswerte einen vorbestimmten ersten Spannungsschwellwert unterschreiten und die Gleichstrommesswerte einen vorbestimmten ersten Stromschwellwert überschreiten, oder
   - wenn innerhalb einer vorbestimmten zweiten Zeitspanne die Gleichspannungsmesswerte einen vorbestimmten zweiten Spannungsschwellwert unterschreiten und die Gleichstrommesswerte ihr Vorzeichen ändern (weil der gemessene (Gleich-)Strom eine Stromrichtungsumkehr aufweist), oder
   - wenn innerhalb der vorbestimmten zweiten Zeitspanne die Gleichspannungsmesswerte den vorbestimmten zweiten Spannungsschwellwert unterschreiten, die Gleichstrommesswerte ihr Vorzeichen ändern (weil der gemessene (Gleich-)Strom eine Stromrichtungsumkehr aufweist) und der Betrag der zeitlichen Änderung der Gleichstrommesswerte einen vorbestimmten ersten Stromänderungsschwellwert überschreitet.

Das Verfahren kann so ablaufen, dass das Auslösesignal alternativ auch dann erzeugt wird, wenn die Gleichstrommesswerte einen vorbestimmten zweiten Stromschwellwert überschreiten. Dieses alternative Kriterium/Charakteristik ist als eine zusätzliche Überstromerkennung ausgebildet. Vorteilhafterweise kann der zweite Stromschwellwert so gewählt werden, dass er dem Bemessungsausschaltstrom des Gleichstromleistungsschalters entspricht. Dadurch wird ein Schutz des Gleichstromleistungsschalters auch dann sichergestellt, wenn die vorstehend genannten (komplizierteren) Kriterien nicht erfüllt sind und daher anhand dieser komplizierteren Kriterien kein Auslösesignal erzeugt wird. Diese Variante des Verfahrens kann also einen Schutz des Gleichstromleistungsschalters (vor Zerstörung durch Überstrom) realisieren.

Das Verfahren kann auch so ablaufen, dass der erste Stromschwellwert kleiner ist als der zweite Stromschwellwert. Wenn der erste Stromschwellwert kleiner ist als der zweite Stromschwellwert, so hat das vorteilhafterweise zur Folge, dass durch Auswertung des ersten Stromschwellwerts schneller das Auslösesignal bei Auftreten eines Fehlers erzeugt werden kann als durch Auswertung des zweiten Stromschwellwerts. Mit anderen Worten gesagt, kann der Gleichstromleistungsschalter schon bei einem geringeren Fehlerstrom ausgeschaltet werden. Dadurch ergibt sich ein besonders schnelles und sicheres Verfahren.

Vorteilhafterweise kann bei dem Verfahren der Gleichstromleistungsschalter ein leistungselektronischer Gleichstromleistungsschalter oder ein Hybrid-Gleichstromleistungsschalter sein.

Das Verfahren kann auch so realisiert sein, dass die Hochspannungsgleichstromquelle (insbesondere die Hochspannungsgleichstromübertragungsstation) einen modularen Multilevelstromrichter aufweist, welcher eine Vielzahl von gleichartigen Modulen aufweist.

Das Verfahren kann auch so ablaufen, dass jedes Modul mindestens zwei elektronische Schaltelemente und einen elektrischen Energiespeicher (in einer Halbbrückenschaltung) aufweist. Solche Module werden auch als Halbbrücken-Module bezeichnet. Bei Hochspannungsgleichstromübertragungsstationen mit modularen Multilevelstromrichtern in Halbbrückentechnik (d.h. mit Halbbrücken-Modulen) lässt sich das Verfahren besonders vorteilhaft anwenden, weil diese Multilevelstromrichter aufgrund der Halbbrücken-Module keine Gegenspannung zu einem Fehlerstrom aufbauen können (im Unterschied zu Multilevelstromrichtern, welche Vollbrücken-Module aufweisen). Das Verfahren kann aber auch bei Hochspannungsgleichstromübertragungsstationen mit modularen Multilevelstromrichtern in Vollbrückentechnik eingesetzt werden.

Das Verfahren kann auch so ablaufen, dass die Hochspannungsgleichstromquelle (insbesondere die Hochspannungsgleichstromübertragungsstation) zwei modulare Multilevelstromrichter aufweist, deren Gleichstromanschlüsse {Gleichspannungsanschlüsse) elektrisch in Reihe geschaltet sind (und bei denen der Verbindungspunkt der Gleichstromanschlüsse einen Masseanschluss bildet). Eine Hochspannungsgleichstromübertragung mit derartigen Hochspannungsgleichstromübertragungsstationen wird auch als bipolare Hochspannungsgleichstromübertragung bezeichnet, weil die Hochspannungsgleichstromübertragungsstation außer dem Masseanschluss zwei weitere Gleichstromanschlüsse aufweist. Ein Gleichstromanschluss hat dabei in der Regel ein höheres Potential als der Masseanschluss und der andere Gleichstromanschluss hat in der Regel ein niedriges Potential als der Masseanschluss.

Das Verfahren kann auch so ablaufen, dass der erste Spannungsschwellwert kleiner ist als der zweite Spannungsschwellwert.

Bei dem Verfahren kann der Gleichstromleistungsschalter ein unidirektionaler Gleichstromleistungsschalter sein. Ein unidirektionaler Gleichstromleistungsschalter ist ein Gleichstromleistungsschalter, der den Stromfluss in lediglich einer Richtung abschalten kann (unidirektional abschaltender Gleichstromleistungsschalter). Der Stromfluss in die andere Richtung ist unabschaltbar, beispielsweise erfolgt dieser Stromfluss über eine antiparallele Diode. Ein leistungselektronischer Gleichstromleistungsschalter hat gegenüber einem mechanischen Leistungsschalter bzw. einem Hybrid-Leistungsschalter (also einem Leistungsschalter, der sowohl mechanische Schaltelemente als auch elektronische Schaltelemente aufweist) den Vorteil, dass der leistungselektronische Gleichstromleistungsschalter den Fehlerstrom sehr schnell abschalten kann. Ein unidirektionaler Gleichstromleistungsschalter lässt sich relativ einfach und kostengünstig realisieren, weil die aktiven leistungselektronischen Bauelemente lediglich für eine Stromrichtung vorgesehen zu sein brauchen. Die andere Stromrichtung kann mittels einer einfachen (ungesteuerten) Diode (oder einer Reihenschaltung aus mehreren Dioden) realisiert werden.

Offenbart wird weiterhin eine Anordnung
- mit einem (leistungselektronischen) Gleichstromleistungsschalter, der zwischen eine Hochspannungsgleichstromquelle und eine Hochspannungsgleichstromübertragungsleitung (eines Hochspannungsgleichstromübertragungsnetzes) geschaltet ist,
- mit einem Spannungssensor zum Messen einer an einem (einzigen) Spannungsmessort an der Hochspannungsgleichstromübertragungsleitung anliegenden Spannung unter Gewinnung von Gleichspannungsmesswerten,
- mit einem Stromsensor zum Messen eines an einem (einzigen) Strommessort durch die Hochspannungsgleichstromübertragungsleitung fließenden Stroms unter Gewinnung von Gleichstrommesswerten, und
- mit einer Steuereinrichtung, welche dazu eingerichtet ist, durch Auswertung (ausschließlich) der Gleichspannungsmesswerte und der Gleichstrommesswerte einen an der Hochspannungsgleichstromübertragungsleitung vorliegenden Fehler (, insbesondere einen an der Hochspannungsgleichstromübertragungsleitung vorliegenden Kurzschluss und/oder Lichtbogen,) zu erkennen und daraufhin ein Auslösesignal für den Gleichstromleistungsschalter zu erzeugen.

Diese Anordnung kann so ausgestaltet sein, dass
- die Steuereinrichtung das Auslösesignal für den Gleichstromleistungsschalter erzeugt,
   - wenn innerhalb einer vorbestimmten ersten Zeitspanne die Gleichspannungsmesswerte einen vorbestimmten ersten Spannungsschwellwert unterschreiten und die Gleichstrommesswerte einen vorbestimmten ersten Stromschwellwert überschreiten.

Diese Anordnung ist so ausgestaltet, dass
- die Steuereinrichtung das Auslösesignal für den Gleichstromleistungsschalter erzeugt,
   - wenn innerhalb einer vorbestimmten zweiten Zeitspanne die Gleichspannungsmesswerte einen vorbestimmten zweiten Spannungsschwellwert unterschreiten und die Gleichstrommesswerte ihr Vorzeichen ändern (weil der gemessene (Gleich-)Strom eine Stromrichtungsumkehr aufweist), oder
   - wenn innerhalb der vorbestimmten zweiten Zeitspanne die Gleichspannungsmesswerte den vorbestimmten zweiten Spannungsschwellwert unterschreiten, die Gleichstrommesswerte ihr Vorzeichen ändern (weil der gemessene (Gleich-)Strom eine Stromrichtungsumkehr aufweist) und der Betrag der zeitlichen Änderung der Gleichstrommesswerte einen vorbestimmten ersten Stromänderungsschwellwert überschreitet.

Damit ergibt sich eine Anordnung
- mit einem (leistungselektronischen) Gleichstromleistungsschalter, der zwischen eine Hochspannungsgleichstromquelle und eine Hochspannungsgleichstromübertragungsleitung (eines Hochspannungsgleichstromübertragungsnetzes) geschaltet ist,
- mit einem Spannungssensor zum Messen einer an einem (einzigen) Spannungsmessort an der Hochspannungsgleichstromübertragungsleitung anliegenden Spannung unter Gewinnung von Gleichspannungsmesswerten,
- mit einem Stromsensor zum Messen eines an einem (einzigen) Strommessort durch die Hochspannungsgleichstromübertragungsleitung fließenden Stroms unter Gewinnung von Gleichstrommesswerten, und
- mit einer Steuereinrichtung, welche dazu eingerichtet ist, ein Auslösesignal für den Gleichstromleistungsschalter zu erzeugen,
   - wenn innerhalb einer vorbestimmten ersten Zeitspanne die Gleichspannungsmesswerte einen vorbestimmten ersten Spannungsschwellwert unterschreiten und die Gleichstrommesswerte einen vorbestimmten ersten Stromschwellwert überschreiten, oder
   - wenn innerhalb einer vorbestimmten zweiten Zeitspanne die Gleichspannungsmesswerte einen vorbestimmten zweiten Spannungsschwellwert unterschreiten und die Gleichstrommesswerte ihr Vorzeichen ändern (weil der gemessene (Gleich-)Strom eine Stromrichtungsumkehr aufweist), oder
   - wenn innerhalb der vorbestimmten zweiten Zeitspanne die Gleichspannungsmesswerte den vorbestimmten zweiten Spannungsschwellwert unterschreiten, die Gleichstrommesswerte ihr Vorzeichen ändern (weil der gemessene (Gleich-)Strom eine Stromrichtungsumkehr aufweist) und der Betrag der zeitlichen Änderung der Gleichstrommesswerte einen vorbestimmten ersten Stromänderungsschwellwert überschreitet.

Diese Anordnung kann so ausgestaltet sein, dass die Steuereinrichtung das Auslösesignal für den Gleichstromleistungsschalter alternativ auch dann erzeugt, wenn die Gleichstrommesswerte einen vorbestimmten zweiten Stromschwellwert überschreiten.

Diese Anordnung kann auch so ausgestaltet sein, dass der erste Stromschwellwert kleiner ist als der zweite Stromschwellwert.

Die Anordnung kann so ausgestaltet sein, dass der Gleichstromleistungsschalter ein leistungselektronischer Gleichstromleistungsschalter oder ein Hybrid-Gleichstromleistungsschalter ist.

Die Anordnung kann auch so ausgestaltet sein, dass der Gleichstromleistungsschalter ein unidirektionaler Gleichstromleistungsschalter ist. Ein unidirektionaler Gleichstromleistungsschalter ist ein Gleichstromleistungsschalter, der den Stromfluss in lediglich einer Richtung abschalten kann (unidirektional abschaltender Gleichstromleistungsschalter).

Die Anordnung kann so ausgestaltet sein, dass die Hochspannungsgleichstromquelle (insbesondere die Hochspannungsgleichstromübertragungsstation) einen modularen Multilevelstromrichter aufweist, welcher eine Vielzahl von gleichartigen Modulen aufweist.

Die Anordnung kann auch so ausgestaltet sein, dass jedes Modul mindestens zwei elektronische Schaltelemente und einen elektrischen Energiespeicher (in einer Halbbrückenschaltung) aufweist.

Die Anordnung kann so ausgestaltet sein, dass die Hochspannungsgleichstromquelle (insbesondere die Hochspannungsgleichstromübertragungsstation) zwei modulare Multilevelstromrichter aufweist, deren Gleichstromanschlüsse (Gleichspannungsanschlüsse) elektrisch in Reihe geschaltet sind (und bei denen der Verbindungspunkt der Gleichstromanschlüsse einen Masseanschluss bildet).

Die Anordnung kann so ausgestaltet sein, dass der erste Spannungsschwellwert kleiner ist als der zweite Spannungsschwellwert.

Das beschriebene Verfahren und die beschriebene Anordnung weisen gleiche bzw. gleichartige Vorteile auf.

Im Folgenden wird die Erfindung anhand von Ausführungsbeispielen näher erläutert. Gleiche Bezugszeichen verweisen dabei auf gleiche oder gleichwirkende Elemente. Dazu ist in
- Figur 1: ein Ausführungsbeispiel eines Multi-Terminal-HGÜ-Systems mit vier Hochspannungsgleichstromübertragungsstationen und elf Gleichstromleistungsschaltern, in
- Figur 2: ein Ausschnitt aus dem Multi-Terminal-HGÜ-System der Figur 1, in
- Figur 3: ein Ausführungsbeispiel einer Hochspannungsgleichstromübertragungsstation, in
- Figur 4: ein Ausführungsbeispiel eines modularen Multilevelstromrichters, in
- Figur 5: ein Ausführungsbeispiel eines Moduls in Halbbrückentechnik, in
- Figur 6: ein Ausführungsbeispiel eines Gleichstromleistungsschalters, in
- Figur 7: ein Ausführungsbeispiel einer Logikschaltung zum Erzeugen eines ersten Auslösesignals, in
- Figur 8: ein Ausführungsbeispiel einer Logikschaltung zum Erzeugen eines zweiten Auslösesignals, in
- Figur 9: ein Ausführungsbeispiel einer Logikschaltung zum Erzeugen eines dritten Auslösesignals und in
- Figur 10: ein Ausführungsbeispiel einer Logikschaltung zum Erzeugen eines (Gesamt-)Auslösesignals aus dem ersten Auslösesignal, dem zweiten Auslösesignal und dem dritten Auslösesignal dargestellt.

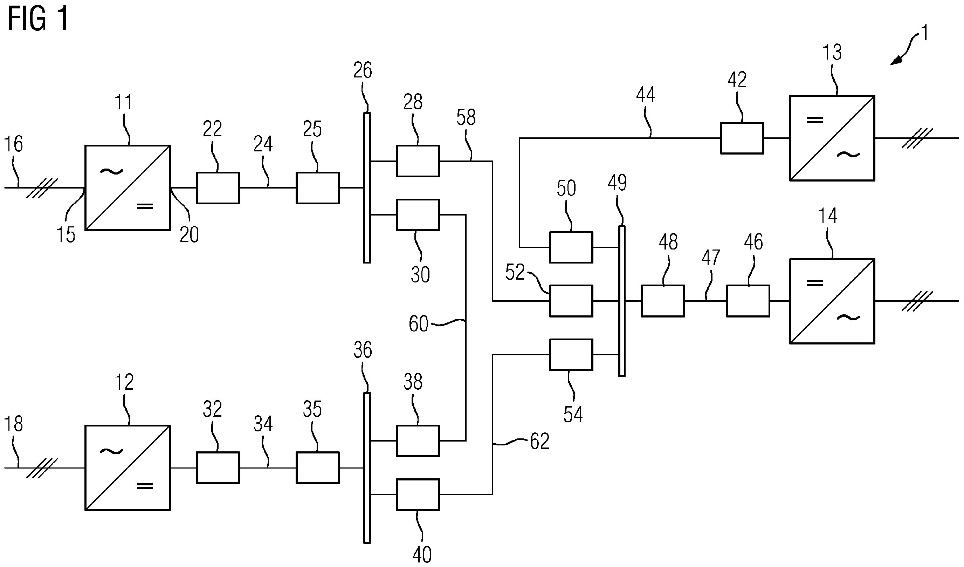

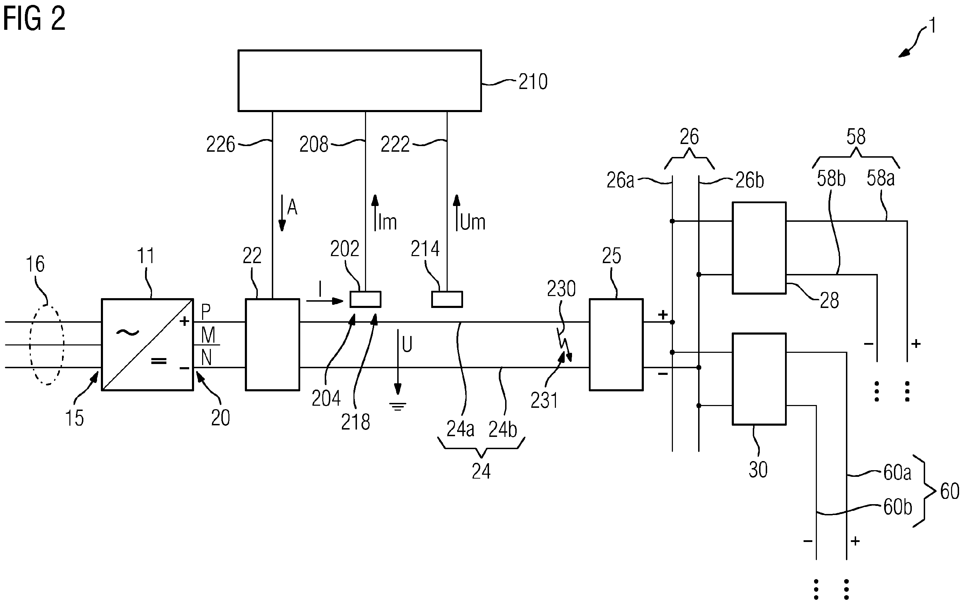

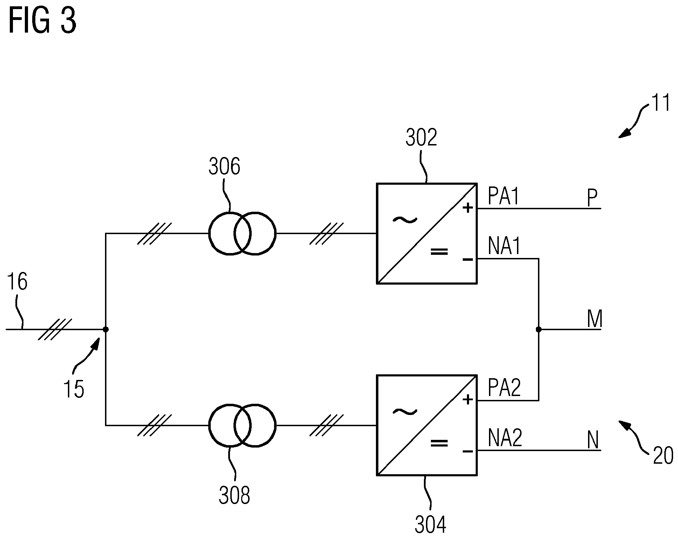

In Figur 1 ist ein Ausführungsbeispiel eines HGÜ-Systems 1 in Form eines Multi-Terminal-Hochspannungsgleichstromübertragungssystems 1 dargestellt. Hochspannungsgleichstromübertragung wird im Folgenden auch mit , HGÜ' abgekürzt. Unter Hochspannung wird hier eine Spannung größer als 100 kV verstanden. Das Multi-Terminal-HGÜ-System 1 weist eine erste HGÜ-Station 11, eine zweite HGÜ-Station 12, eine dritte HGÜ-Station 13 und eine vierte HGÜ-Station 14 auf. Die HGÜ-Stationen 11, 12, 13 und 14 haben im Wesentlichen die Funktion eines Stromrichters, welcher Wechselstrom in Gleichstrom und/oder Gleichstrom in Wechselstrom umwandeln kann. Daher sind die HGÜ-Stationen in der Figur 1 jeweils als ein Stromrichter symbolisiert. Die HGÜ-Stationen können auch als HGÜ-Stromrichterstationen oder als HGÜ-Umrichterstationen bezeichnet werden. Die HGÜ-Stationen sind jeweils eine Hochspannungsgleichstromquelle. Ein Wechselstromanschluss 15 der ersten HGÜ-Station 11 ist über eine erste dreiphasige Wechselstromleitung 16 mit einem nicht dargestellten ersten Wechselstromnetz verbunden. Ebenso ist die zweite HGÜ-Station 12 über eine Wechselstromleitung 18 mit einem nicht dargestellten zweiten Wechselstromnetz verbunden. In gleicher Weise sind auch die dritte HGÜ-Station 13 und die vierte HGÜ-Station 14 jeweils über eine dreiphasige Wechselstromleitung mit einem nicht dargestellten Wechselstromnetz verbunden. Ein Gleichstromanschluss 20 der ersten HGÜ-Station 11 ist über einen ersten Gleichstromleistungsschalter 22 mit einer ersten HGÜ-Leitung 24 elektrisch verbunden. Die erste HGÜ-Leitung 24 (und auch alle anderen HGÜ-Leitungen) weist einen positiven Pol und einen negativen Pol auf (vgl. Figur 2). Die erste HGÜ-Leitung 24 ist über einen zweiten Gleichstromleistungsschalter 25 und eine erste Sammelschiene 26 mit einem dritten Gleichstromleistungsschalter 28 und mit einem vierten Gleichstromleistungsschalter 30 elektrisch verbunden. Die erste Sammelschiene 26 (und auch alle anderen Sammelschienen des HGÜ-Systems 1) weist zwei getrennte Stromschienen auf: eine Stromschiene 26a für den positiven Pol der HGÜ-Leitung und eine Stromschiene 26b für den negativen Pol der HGÜ-Leitung (vgl. Figur 3).

In ähnlicher Art und Weise ist ein Gleichstromanschluss der zweiten HGÜ-Station 12 über einen fünften Gleichstromleistungsschalter 32, eine zweite HGÜ-Leitung 34, einen sechsten Gleichstromleistungsschalter 35 und eine zweite Sammelschiene 36 mit einem siebenten Gleichstromleistungsschalter 38 und einem achten Gleichstromleistungsschalter 40 elektrisch verbunden. Weiterhin ist ein Gleichstromanschluss der dritten HGÜ-Station 13 über einen neunten Gleichstromleistungsschalter 42 mit einer dritten HGÜ-Leitung 44 elektrisch verbunden. Weiterhin ist ein Gleichstromanschluss der vierten HGÜ-Station 14 über einen zehnten Gleichstromleistungsschalter 46, eine vierte HGÜ-Leitung 47, einen elften Gleichstromleistungsschalter 48 und eine dritte Sammelschiene 49 mit einem zwölften Gleichstromleistungsschalter 50, einem dreizehnten Gleichstromleistungsschalter 52 und einem vierzehnten Gleichstromleistungsschalter 54 elektrisch verbunden.

Der dritte Gleichspannungsleistungsschalter 28 ist über eine fünfte HGÜ-Leitung 58 mit dem dreizehnten Gleichstromleistungsschalter 52 verbunden. Der vierte Gleichstromleistungsschalter 30 ist über eine sechste HGÜ-Leitung 60 mit dem siebenten Gleichstromleistungsschalter 38 verbunden. Der achte Gleichstromleistungsschalter 40 ist über eine siebente HGÜ-Leitung 62 mit dem vierzehnten Gleichstromleistungsschalter 54 elektrisch verbunden. Wenn die Gleichstromleistungsschalter unidirektionale Gleichstromleistungsschalter sind, dann können die Gleichstromleistungsschalter jeweils so orientiert sein, dass die an den HGÜ-Stationen bzw. an den Sammelschienen anliegenden Gleichstromleistungsschalter jeweils den von der jeweiligen HGÜ-Station bzw. von der jeweiligen Sammelschiene wegfließenden Strom abschalten können. Mit anderen Worten gesagt, können die Gleichstromleistungsschalter jeweils so orientiert sein, dass die an den Hochspannungsgleichstromquellen anliegenden Gleichstromleistungsschalter jeweils den von der jeweiligen Hochspannungsgleichstromquelle wegfließenden Strom abschalten können. Dies trifft zumindest auf den positiven Anschluss der HGÜ-Stationen bzw. Sammelschienen zu. Beim negativen Anschluss der HGÜ-Stationen bzw. Sammelschienen ist die Stromrichtung umgekehrt und folglich kann dort die Orientierung der Gleichstromleistungsschalter umgekehrt sein.

Da das HGÜ-System 1 vier Terminals in Form der vier HGÜ-Stationen 11, 12, 13 und 14 aufweist, wird dieses HGÜ-System auch als ein Multi-Terminal-HGÜ-System 1 bzw. als ein Multi-Terminal-HGÜ-Netz 1 bezeichnet.

In anderen Ausführungsbeispielen eines HGÜ-Systems können die Sammelschienen auch weggelassen sein und die an die Sammelschienen angeschlossenen Gleichstromleistungsschalter können unmittelbar mit den Gleichstromanschlüssen der jeweiligen HGÜ-Stationen verbunden sein.

In Figur 2 ist ein Ausschnitt aus dem HGÜ-System 1 in detaillierterer Form dargestellt. So ist deutlich zu erkennen, dass der Gleichstromanschluss 20 der ersten HGÜ-Station 11 drei unterschiedliche Anschlüsse aufweist: einen positiven Anschluss P, einen negativen Anschluss N sowie einen Masseanschluss M (auch als Masseleiter M bezeichnet). Der Masseanschluss M weist in der Regel Erdpotential auf. Dabei sind der positive Anschluss P und der negative Anschluss N über den ersten Gleichstromleistungsschalter 22 mit der ersten HGÜ-Leitung 24 elektrisch verbunden. Weiterhin ist in Figur 2 gut zu erkennen, dass die HGÜ-Leitungen jeweils einen positiven Pol 24a, 58a, 60a und einen negativen Pol 24b, 58b, 60b aufweisen; der positive Anschluss P ist mit dem positiven Pol 24a der ersten HGÜ-Leitung 24 verbunden, der negative Anschluss N ist mit dem negativen Pol 24b der ersten HGÜ-Leitung 24 verbunden. Mittels eines Stromsensors 202 wird an einem Strommessort 204 (am positiven Pol 24a der ersten HGÜ-Leitung 24) der durch die erste HGÜ-Leitung 24 fließende Gleichstrom I unter Gewinnung von Gleichstrommesswerten Im gemessen. Diese Gleichstrommesswerte Im werden (über eine erste Datenleitung 208) zu einer Steuereinrichtung 210 übertragen. Mittels eines Spannungssensors 214 wird die an einem Spannungsmessort 218 an der ersten HGÜ-Leitung 24 anliegende Spannung U unter Gewinnung von Gleichspannungsmesswerten Um gemessen. Diese Gleichspannungsmesswerte Um werden (mittels einer zweiten Datenleitung 222) zu der Steuereinrichtung 210 übertragen. Die Gleichspannungsmesswerte Um werden im Ausführungsbeispiel gegen Erdpotential gemessen.

Die Steuereinrichtung 210 wertet die Gleichstrommesswerte Im und die Gleichspannungsmesswerte Um aus und erkennt aufgrund dieser Auswertung, wenn an der ersten HGÜ-Leitung 24 (oder an einer mit der ersten HGÜ-Leitung 24 verbundenen weiteren HGÜ-Leitung, wie beispielsweise an der fünften HGÜ-Leitung 58 oder an der sechsten HGÜ-Leitung 60) ein elektrischer Fehler 230 auftritt. Ein solcher elektrischer Fehler 230 wird auch als "Leitungsfehler", "Leitungsquerfehler" oder als "DC-Fehler" bezeichnet. Ein solcher elektrischer Fehler 230 kann insbesondere ein Kurzschluss 230 sein, wie beispielsweise ein Kurzschluss zwischen dem positiven Pol und dem negativen Pol der HGÜ-Leitung oder ein Kurzschluss zwischen einem der Pole der HGÜ-Leitung und Erdpotential. Ein solcher Fehler kann auch beispielsweise ein Kurzschluss 230 mit Ausbildung eines Lichtbogens sein. Der Fehler 230 tritt an einem Fehlerort 231 (Fehlerstelle 231) an der HGÜ-Leitung auf.

Wenn aufgrund der Auswertung der Gleichspannungsmesswerte Um und der Gleichstrommesswerte Im das Vorliegen eines solchen Fehlers 230 an der ersten HGÜ-Leitung 24 (oder an einer der anderen HGÜ-Leitungen) erkannt wird, dann erzeugt die Steuereinrichtung 210 ein Auslösesignal A. Dieses Auslösesignal A wird (mittels einer dritten Datenleitung 226) zu dem ersten Gleichstromleistungsschalter 22 übertragen. Auf das Auslösesignal A hin löst der erste Gleichstromleistungsschalter 22 aus, d. h. der erste Gleichstromleistungsschalter 22 öffnet. Dadurch wird die erste HGÜ-Leitung 24 von der ersten HGÜ-Station 11 getrennt. Mit anderen Worten wird ein Stromfluss von der ersten HGÜ-Station 11 zu der ersten HGÜ-Leitung 24 unterbrochen. Dadurch wird die Energiezufuhr zum Fehlerort 231 an der ersten HGÜ-Leitung 24 unterbrochen, wodurch ein ggf. brennender Lichtbogen erlischt und/oder die erste HGÜ-Leitung 24 spannungsfrei geschaltet wird. Hierbei ist von Vorteil, dass mittels der entsprechenden Gleichstromleistungsschalter nur jeweils diejenige HGÜ-Leitung, an der der Fehler auftritt, von der energieeinspeisenden HGÜ-Station getrennt wird. Beispielsweise (vgl. Figur 1) kann es bei dem Fehler 230 an der ersten HGÜ-Leitung 24 ausreichend sein, wenn der erste Gleichstromleistungsschalter 22 die Energieeinspeisung der ersten HGÜ-Station 11 in die erste HGÜ-Leitung 24 unterbricht. Je nach Richtung des Energieflusses kann es auch notwendig sein, dass der zweite Gleichstromleistungsschalter 25 die Energiezufuhr zu der ersten HGÜ-Leitung 24 unterbricht. Andere nicht von dem Fehler 230 betroffene HGÜ-Leitungen des HGÜ-Systems 1 (wie beispielsweise die dritte HGÜ-Leitung 44, die zweite HGÜ-Leitung 34 oder die siebente HGÜ-Leitung 62) brauchen jedoch nicht spannungsfrei geschaltet zu werden, so dass die Energieübertragung in den nicht von dem Fehler 230 betroffenen Teilen des HGÜ-Netzes 1 weiter stattfinden kann. Es ist also ein großer Vorteil, dass mittels der jeweiligen Gleichstromleistungsschalter selektiv Netzabschnitte des HGÜ-Netzes 1 abgeschaltet (d. h. spannungsfrei geschaltet) werden können.

Die übrigen Gleichstromleistungsschalter des HGÜ-Netzes 1 (d. h. der zweite Gleichstromleistungsschalter 25 bis zum vierzehnten Gleichstromleistungsschalter 54) sind ebenfalls mit einer Steuereinrichtung und mit jeweils einem Stromsensor und jeweils einem Spannungssensor elektrisch verbunden. Dabei kann jedem Gleichstromleistungsschalter eine eigene Steuereinrichtung zugeordnet sein oder mehreren Gleichstromleistungsschaltern (im Extremfall allen Gleichstromleistungsschaltern) kann eine gemeinsame Steuereinrichtung zugeordnet sein. Im letztgenannten Fall empfangen die Gleichstromleistungsschalter von der gemeinsamen Steuereinrichtung jeweils (selektiv) ein individuelles Auslösesignal A. Aus Gründen der Übersichtlichkeit sind in Figur 2 die Steuereinrichtung, der Stromsensor und der Spannungssensor nur im Zusammenhang mit dem ersten Gleichstromleistungsschalter 22 figürlich dargestellt.

In Figur 3 ist ein Ausführungsbeispiel der ersten HGÜ-Station 11 dargestellt. Die zweite HGÜ-Station12, die dritte HGÜ-Station 13 und die vierte HGÜ-Station 14 können ebenso aufgebaut sein wie die erste HGÜ-Station 11.

Die erste HGÜ-Station 11 weist einen ersten Stromrichter 302 und einen zweiten Stromrichter 304 auf. Der erste Stromrichter 302 bildet dabei einen ersten Teil-Stromrichter 302 der HGÜ-Station 11; der zweite Stromrichter 304 bildet einen zweiten Teil-Stromrichter 304 der ersten HGÜ-Station11. Ein Wechselstromanschluss des ersten Stromrichters 302 ist über einen ersten (Wechselstrom-)Transformator 306 mit dem Wechselstromanschluss 15 der ersten HGÜ-Station 11 elektrisch verbunden. Ein Wechselstromanschluss des zweiten Stromrichters 304 ist über einen zweiten (Wechselstrom-)Transformator 308 mit dem Wechselstromanschluss 15 der ersten HGÜ-Station 11 elektrisch verbunden. Ein positiver Gleichstromanschluss PA1 des ersten Stromrichters 302 bildet den positiven Anschluss P der ersten HGÜ-Station 11. Ein negativer Gleichstromanschluss NA1 des ersten Stromrichters 302 ist elektrisch verbunden mit einem positiven Gleichstromanschluss PA2 des zweiten Stromrichters 304. Diese elektrische Verbindung bildet den Masseanschluss M der ersten HGÜ-Station11. Ein negativer Gleichstromanschluss NA2 des zweiten Stromrichters 304 bildet den negativen Anschluss N der ersten HGÜ-Station 11.

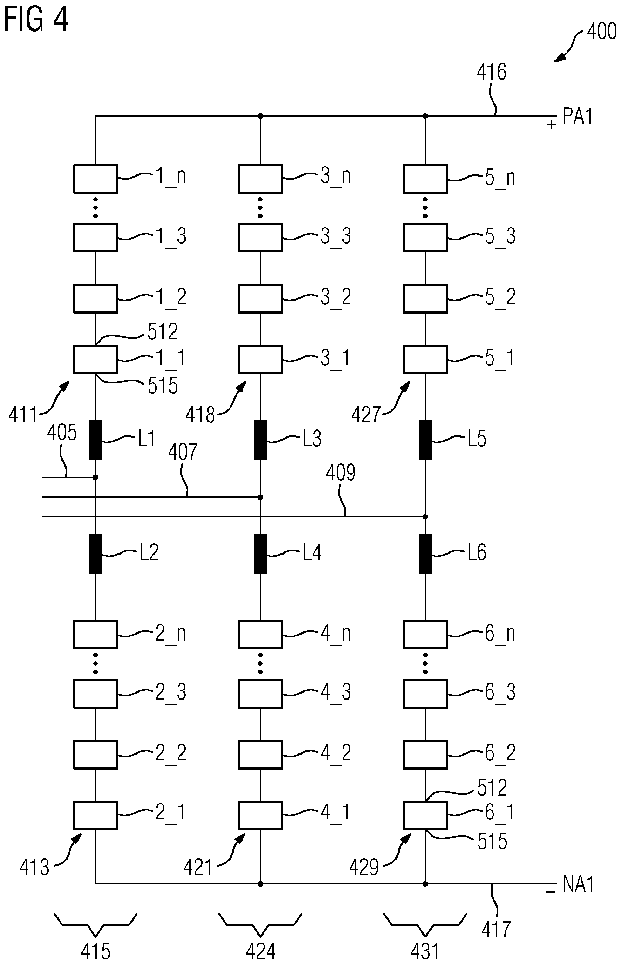

In Figur 4 ist ein Ausführungsbeispiel eines Stromrichters 400 dargestellt. Dabei kann es sich beispielsweise um den in Figur 3 dargestellten ersten Stromrichter 302 und/oder den zweiten Stromrichter 304 handeln. Es ist auch möglich, dass eine oder mehrere der HGÜ-Stationen lediglich einen Stromrichter aufweist, beispielsweise einen Stromrichter in der in Figur 4 dargestellten Form.

Der Stromrichter 400 ist ein modularer Multilevelstromrichters 400 (modular multilevel converter, MMC). Dieser Stromrichter 400 weist einen ersten Wechselstromanschluss 405, einen zweiten Wechselstromanschluss 407 und einen dritten Wechselstromanschluss 409 auf. Der erste Wechselstromanschluss 405 ist elektrisch mit einem ersten Phasenmodulzweig 411 und einem zweiten Phasenmodulzweig 413 verbunden. Der erste Phasenmodulzweig 411 und der zweite Phasenmodulzweig 413 bilden ein erstes Phasenmodul 415 des Stromrichters 400. Das dem ersten Wechselstromanschluss 405 abgewandte Ende des ersten Phasenmodulzweigs 411 ist mit einem ersten Gleichstromanschluss 416 elektrisch verbunden; das dem ersten Wechselstromanschluss 405 abgewandte Ende des zweiten Phasenmodulzweigs 413 ist mit einem zweiten Gleichstromanschluss 417 elektrisch verbunden. Der erste Gleichstromanschluss 416 ist ein positiver Gleichstromanschluss; der zweite Gleichstromanschluss 417 ist ein negativer Gleichstromanschluss. Der erste Gleichstromanschluss 416 kann beispielsweise der positive Gleichstromanschluss PA1 gemäß Figur 3 sein und der zweite Gleichstromanschluss 417 kann der negative Gleichstromanschluss NA1 sein.

Der zweite Wechselstromanschluss 407 ist mit einem Ende eines dritten Phasenmodulzweigs 418 und mit einem Ende eines vierten Phasenmodulzweigs 421 elektrisch verbunden. Der dritte Phasenmodulzweig 418 und der vierte Phasenmodulzweig 421 bilden ein zweites Phasenmodul 424. Der dritte Wechselstromanschluss 409 ist mit einem Ende eines fünften Phasenmodulzweigs 427 und mit einem Ende eines sechsten Phasenmodulzweigs 429 elektrisch verbunden. Der fünfte Phasenmodulzweig 427 und der sechste Phasenmodulzweig 429 bilden ein drittes Phasenmodul 431.

Das dem zweiten Wechselstromanschluss 407 abgewandte Ende des dritten Phasenmodulzweigs 418 und das dem dritten Wechselstromanschluss 409 abgewandte Ende des fünften Phasenmodulzweigs 427 sind mit dem ersten Gleichstromanschluss 416 elektrisch verbunden. Das dem zweiten Wechselstromanschluss 407 abgewandte Ende des vierten Phasenmodulzweigs 421 und das dem dritten Wechselstromanschluss 409 abgewandte Ende des sechsten Phasenmodulzweigs 429 sind mit dem zweiten Gleichstromanschluss 417 elektrisch verbunden.

Jeder Phasenmodulzweig weist eine Mehrzahl von Modulen (1_1, 1_2, 1_3 ... 1_n; 2_1 ... 2_n; usw.) auf, welche elektrisch in Reihe geschaltet sind. Solche Module werden auch als Submodule bezeichnet. Im Ausführungsbeispiel der Figur 1 weist jeder Phasenmodulzweig n Module auf. Die Anzahl der elektrisch in Reihe geschalteten Module kann sehr verschieden sein, mindestens sind drei Module in Reihe geschaltet, es können aber auch beispielsweise 50, 100 oder mehr Module elektrisch in Reihe geschaltet sein. Im Ausführungsbeispiel ist n = 36: der erste Phasenmodulzweig 411 weist also 36 Module 1_1, 1_2, 1_3, ... 1_36 auf. Die anderen Phasenmodulzweige 413, 418, 421, 427 und 429 sind gleichartig aufgebaut. Außerdem weist jeder Phasenmodulzweig eine Induktivität Lx (Induktivität L1 ... L6, Spule L1 ... L6) auf. So weist der erste Phasenmodulzweig 411 eine erste Induktivität L1 auf. Der zweite Phasenmodulzweig 413 weist eine zweite Induktivität L2 auf usw..

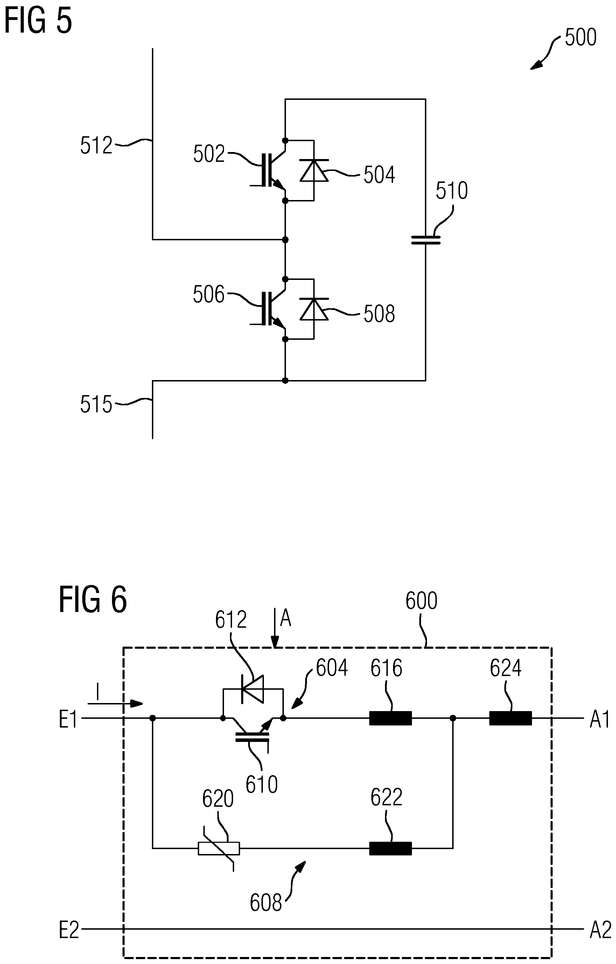

In Figur 5 ist ein Ausführungsbeispiel eines Moduls 500 dargestellt. Dabei kann es sich beispielsweise um eines der Module 1_1 bis 6_n des in Figur 4 dargestellten Stromrichters 400 handeln.

Das Modul 500 ist als ein Halbbrückenmodul 500 ausgestaltet. Das Modul 500 weist ein erstes (abschaltbares) elektronisches Schaltelement 502 (erstes abschaltbares Halbleiterventil 502) mit einer ersten antiparallel geschalteten Diode 504 auf. Weiterhin weist das Modul 500 ein zweites (abschaltbares) elektronisches Schaltelement 506 (zweites abschaltbares Halbleiterventil 506) mit einer zweiten antiparallel geschalteten Diode 508 sowie einen elektrischen Energiespeicher 510 in Form eines Kondensators 510 auf. Das erste elektronische Schaltelement 502 und das zweite elektronische Schaltelement 506 sind jeweils als ein IGBT (insulated-gate bipolar transistor) ausgestaltet. Das erste elektronische Schaltelement 502 ist elektrisch in Reihe geschaltet mit dem zweiten elektronischen Schaltelement 506. Am Verbindungspunkt zwischen den beiden elektronischen Schaltelementen 502 und 506 ist ein erster galvanischer Modulanschluss 512 angeordnet. An dem Anschluss des zweiten elektronischen Schaltelements 506, welcher dem Verbindungspunkt gegenüberliegt, ist ein zweiter galvanischer Modulanschluss 515 angeordnet. Der zweite Modulanschluss 515 ist weiterhin mit einem ersten Anschluss des Energiespeichers 510 elektrisch verbunden; ein zweiter Anschluss des Energiespeichers 510 ist elektrisch verbunden mit dem Anschluss des ersten elektronischen Schaltelements 502, der dem Verbindungspunkt gegenüberliegt.

Der Energiespeicher 510 ist also elektrisch parallel geschaltet zu der Reihenschaltung aus dem ersten elektronischen Schaltelement 502 und dem zweiten elektronischen Schaltelement 506. Durch entsprechende Ansteuerung des ersten elektronischen Schaltelements 502 und des zweiten elektronischen Schaltelements 506 durch eine (nicht dargestellte) elektronische Ansteuerschaltung kann erreicht werden, dass zwischen dem ersten Modulanschluss 512 und dem zweiten Modulanschluss 515 entweder die Spannung des Energiespeichers 510 ausgegeben wird oder keine Spannung ausgegeben wird (d.h. eine Nullspannung ausgegeben wird). Durch Zusammenwirken der Module der einzelnen Phasenmodulzweige kann so die jeweils gewünschte Ausgangsspannung des Stromrichters erzeugt werden.

In Figur 6 ist ein Ausführungsbeispiel eines Gleichstromleistungsschalters 600 dargestellt. Einer, mehrere oder alle der in den Figuren 1 und 2 dargestellten Gleichstromleistungsschalter können so aufgebaut sein wie der Gleichstromleistungsschalter 600 der Figur 6.

Der Gleichstromleistungsschalter 600 weist einen ersten Eingang E1, einen zweiten Eingang E2, einen ersten Ausgang A1 und einen zweiten Ausgang A2 auf. Der zweite Eingang E2 und der zweite Ausgang A2 sind dauerhaft miteinander elektrisch verbunden. Es wird lediglich der Strom zwischen dem ersten Eingang E1 und dem ersten Ausgang A1 geschaltet. Zwischen dem ersten Eingang E1 und dem ersten Ausgang A1 befinden sich zwei Strompfade, welche parallel zueinander geschaltet sind: ein Betriebsstrompfad 604 und ein Abschaltstrompfad 608. Der Betriebsstrompfad 604 weist einen elektronischen Schalter 610 auf. Bei dem elektronischen Schalter 610 kann es sich beispielsweise um einen IGBT (oder um eine Reihenschaltung von mehreren IGBTs) handeln. Antiparallel zu dem elektronischen Schalter 610 ist eine Diode 612 (Freilaufdiode 612) geschaltet. Anstelle der Diode 612 kann auch eine Reihenschaltung aus mehreren Dioden verwendet werden. (Anstelle des IGBTs 610 mit antiparalleler Diode 612 kann auch ein rückwärts leitfähiger IGBT verwendet werden.) Zu der Parallelschaltung aus elektronischem Schalter 610 und Diode 612 ist in Reihe eine erste Induktivität 616 geschaltet. Der Abschaltstrompfad 608 weist eine Reihenschaltung aus einem Überspannungsableiter 620 und einer zweiten Induktivität 622 auf. Zwischen dem Verbindungspunkt von dem Betriebsstrompfad 604 und dem Abschaltstrompfad 608 und dem ersten Ausgang A1 ist eine dritte Induktivität 624 angeordnet.

Im eingeschalteten Zustand des Gleichstromleistungsschalters 600 fließt der Strom I (Gleichstrom I) vom Eingang E1 über den eingeschalteten elektronischen Schalter 610 zum Ausgang A1. Sobald der Gleichstromleistungsschalter 600 das Auslösesignal A erhält, wird der elektronische Schalter 610 geöffnet (hier: der IGBT wird ausgeschaltet). Daraufhin kommutiert der Strom I von dem Betriebsstrompfad 604 in den Abschaltstrompfad 608. Aufgrund des Stroms I im Abschaltstrompfad 608 entsteht am Überspannungsableiter 620 eine Gegenspannung, welche zur Folge hat, dass der Strom I verringert wird und schließlich auf Null abfällt. Dabei wird elektrische Energie im Überspannungsableiter 620 in Wärme umgewandelt und an die Umwelt abgegeben. Die erste Induktivität 616 und/oder die zweite Induktivität 622 brauchen nicht als real vorhandene Bauelemente in dem Gleichstromleistungsschalter 600 vorhanden zu sein. Diese Induktivitäten können beispielsweise durch Leitungsinduktivitäten oder Streuinduktivitäten innerhalb des Gleichstromleistungsschalters 600 entstehen. Die dritte Induktivität 624 kann als ein Bauelement in den Gleichstromleistungsschalter 600 eingebaut sein. Die dritte Induktivität 624 begrenzt den Stromanstieg durch den elektronischen Schalter 610.

Der dargestellte Gleichstromleistungsschalter 600 ist ein leistungselektronischer Gleichstromleistungsschalter 600 (SSCB, Solid State Circuit Breaker), insbesondere ein unidirektionaler leistungselektronischer Gleichstromleistungsschalter 600. Der Gleichstromleistungsschalter 600 kann nämlich lediglich einen Stromfluss in einer Richtung abschalten (nämlich den Stromfluss in Richtung vom ersten Eingang E1 zum ersten Ausgang A1). Es handelt sich also um einen unidirektional abschaltenden Gleichstromleistungsschalter 600. Anstelle dieses unidirektional abschaltenden Gleichstromleistungsschalters kann selbstverständlich auch ein bidirektional abschaltender Gleichstromleistungsschalter verwendet werden, also ein Gleichstromleistungsschalter, der in der Lage, den Stromfluss in beiden Richtungen abzuschalten. Anstelle des leistungselektronischen Gleichstromleistungsschalters 600 kann aber auch ein mechanischer Gleichstromleistungsschalter oder ein Hybrid-Gleichstromleistungsschalter verwendet werden.

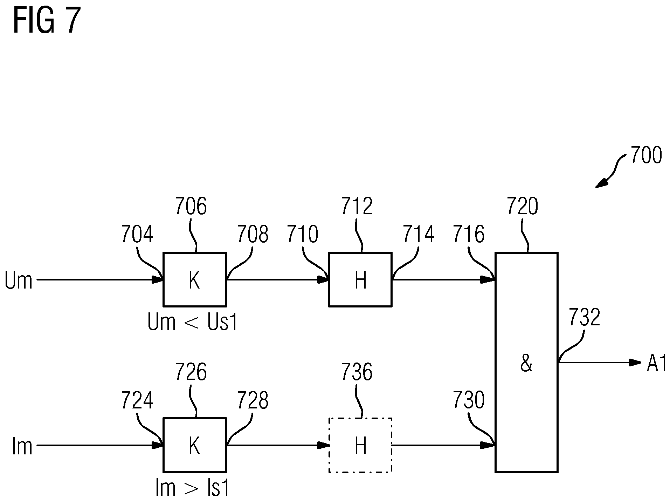

In Figur 7 ist ein Ausführungsbeispiel einer ersten Logikschaltung 700 dargestellt. Diese erste Logikschaltung 700 erzeugt aus den Gleichspannungsmesswerten Um und den Gleichstrommesswerten Im ein erstes Auslösesignal A1. Die erste Logikschaltung 700 realisiert einen Überstromschutz mit Unterspannungserkennung.

Die Gleichspannungsmesswerte Um gelangen zu einem Eingang 704 eines ersten Komparators 706. Der erste Komparator 706 vergleicht die Gleichspannungsmesswerte Um mit einem ersten Spannungsschwellwert Us1 (erster Spannungsschwellenwert Us1). Sobald die Gleichspannungsmesswerte Um unter den ersten Spannungsschwellwert Us1 absinken, wird an einem Ausgang 708 des ersten Komparators 706 ein logisches 1-Signal (auch als eine logische 1 oder als ein logisches high-Signal bezeichnet) ausgegeben. Der Ausgang 708 des ersten Komparators 706 ist mit einem Eingang 710 eines ersten Haltegliedes 712 verbunden. Ein Ausgang 714 des ersten Haltegliedes 712 ist mit einem ersten Eingang 716 eines ersten UND-Glieds 720 verbunden. Das erste Halteglied 712 speichert den an seinem Eingang 710 angelegten logischen Wert für eine erste Zeitspanne.

Die Gleichstrommesswerte Im gelangen zu einem Eingang 724 eines zweiten Komparators 726. Dieser zweite Komparator 726 gibt an seinem Ausgang 728 ein logisches 1-Signal aus, sobald die Gleichstrommesswerte Im einen ersten Stromschwellwert Is1 (erster Stromschwellenwert Is1) überschreiten. Der Ausgang 728 des zweiten Komparators 726 ist mit einem zweiten Eingang 730 des ersten UND-Glieds 720 elektrisch verbunden. Sobald gleichzeitig an dem ersten Eingang 716 und an dem zweiten Eingang 730 des ersten UND-Glieds 720 ein logisches 1-Signal anliegt, gibt das erste UND-Glied 720 an seinem Ausgang 732 ein Signal in Form eines logischen 1-Signals aus. Dieses logische 1-Signal ist das erste Auslösesignal A1.

Optional kann zwischen dem Ausgang 728 des zweiten Komparators 726 und dem zweiten Eingang 730 des ersten UND-Gliedes 720 ein zweites Halteglied 736 angeordnet sein. Das erste Halteglied 712 (sowie ggf. das zweite Halteglied 736) sorgen dafür, dass das erste Auslösesignal A1 auch dann ausgegeben wird, wenn nicht gleichzeitig die Unterschreitung des ersten Spannungsschwellwerts Us1 und die Überschreitung des ersten Stromschwellwerts Is1 stattfindet. Vielmehr brauchen die Unterschreitung des ersten Spannungsschwellwerts Us1 und die Überschreitung des ersten Stromschwellwerts Is1 lediglich innerhalb einer vorgegebenen ersten Zeitspanne stattzufinden, um das erste Auslösesignal 1 zu erzeugen. Diese erste Zeitspanne entspricht entweder der Haltezeit des ersten Halteglieds 712 oder - für den Fall, dass zusätzlich ein zweites Halteglied 736 vorhanden ist - ergibt sich diese erste Zeitspanne aus der Haltezeit des ersten Halteglieds 712 und der Haltezeit des zweiten Halteglieds 736.

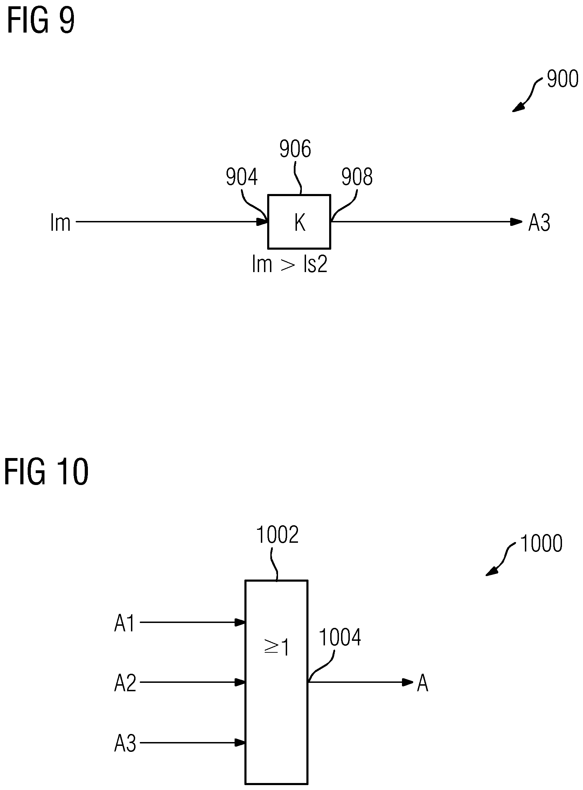

Sobald das erste Auslösesignal A1 ausgegeben wird (d. h. sobald das erste Auslösesignal A1 den logischen Wert 1 annimmt), wird auch das (Gesamt-)Auslösesignal A ausgegeben, d. h. auf logisch 1 (logisches 1-Signal) gesetzt (vgl. Figur 10).

Das erste Auslösesignal A1 wird also dann erzeugt, wenn - innerhalb der vorbestimmten ersten Zeitspanne - sowohl die Gleichspannungsmesswerte Um kleiner werden als der erste Spannungsschwellwert Us1 und die Gleichstrommesswerte Im größer werden als der erste Stromschwellwert Is1. Es werden also zwei Größen ausgewertet, um das erste Auslösesignal A1 zu erzeugen: die Spannungsmesswerte Um und die Strommesswerte Im. Eine derartige Änderung der Gleichspannungsmesswerte Um und der Gleichstrommesswerte Im tritt im Ausführungsbeispiel dann auf, wenn an der ersten HGÜ-Leitung 24 der Kurzschluss 230 auftritt (vgl. Figur 2). Dann steigt aufgrund des Kurzschlusses 230 der Gleichstrom I an, d. h. die Gleichstrommesswerte Im überschreiten den ersten Stromschwellwert Is1. Gleichzeitig kommt es zu einem Spannungseinbruch an der ersten HGÜ-Leitung 24, wodurch die Gleichspannungsmesswerte Um kleiner werden; die Gleichspannungsmesswerte Um unterschreiten also den ersten Spannungsschwellwert Us1. Auf diese Art und Weise wird der Fehler an der ersten HGÜ-Leitung 24 erkannt und daraufhin das erste Auslösesignal A1 erzeugt. Daraufhin wird das (Gesamt-)Auslösesignal A erzeugt (d. h. auf ein logisches 1-Signal gesetzt). Auf das Auslösesignal A hin löst der erste Gleichstromleistungsschalter 22 aus und unterbricht den Stromfluss von der ersten HGÜ-Station 11 zu der ersten HGÜ-Leitung 24. Dadurch wird der Fehler an der ersten HGÜ-Leitung 24 geklärt. Der erste Spannungsschwellwert Us1 kann beispielsweise 40% der Nennspannung der ersten HGÜ-Leitung 24 entsprechen. Der erste Stromschwellwert Is1 kann beispielsweise 120% des Nennstromes der ersten HGÜ-Leitung 24 entsprechen.

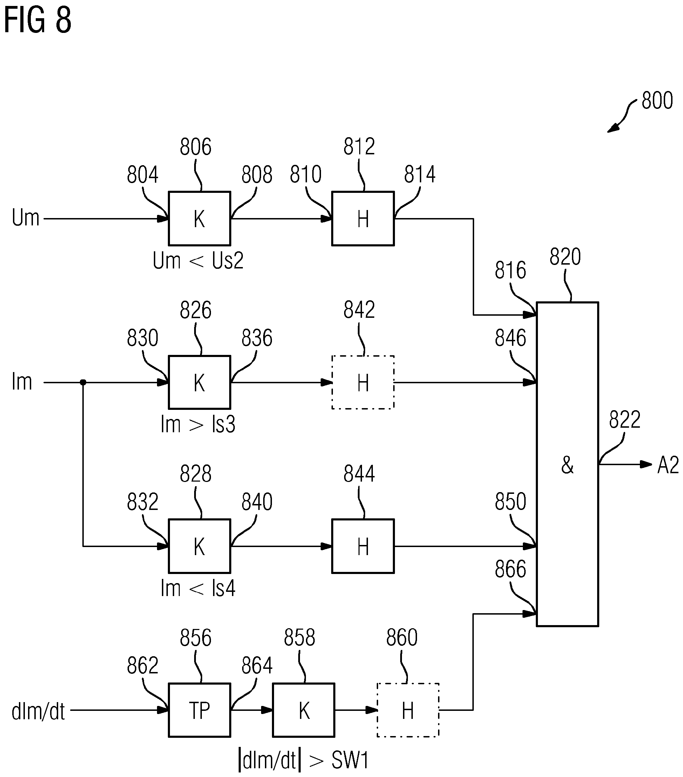

In Figur 8 ist ein Ausführungsbeispiel einer zweiten Logikschaltung 800 dargestellt. Diese zweite Logikschaltung 800 wertet die Gleichspannungsmesswerte Um und die Gleichstrommesswerte Im aus und erzeugt im Ergebnis dieser Auswertung ein zweites Auslösesignal A2. Die zweite Logikschaltung 800 realisiert einen Überstromschutz mit einer Stromrichtungserkennung.

Im oberen Teil der Figur 8 ist ein erster Schaltungsteil der zweiten Logikschaltung 800 dargestellt. Der erste Schaltungsteil wertet aus, ob die Gleichspannungsmesswerte Um einen zweiten Spannungsschwellwert Us2 unterschreiten. Dies erfolgt in ähnlicher Art und Weise wie oben in Verbindung mit dem oberen Teil der ersten Logikschaltung 700 der Figur 7 dargestellt und beschrieben ist. Zu diesem Zweck werden die Gleichspannungsmesswerte Um einem Eingang 804 eines dritten Komparators 806 zugeführt. Ein Ausgang 808 des dritten Komparators 806 ist mit einem Eingang 810 eines dritten Halteglieds 812 verbunden. Ein Ausgang 814 des dritten Halteglieds 812 ist mit einem ersten Eingang 816 eines zweiten UND-Glieds 820 verbunden. An einem Ausgang 822 des zweiten UND-Glieds 820 wird das zweite Auslösesignal A2 ausgegeben. Der dritte Komparator 806 erkennt, wenn die Gleichspannungsmesswerte Um den zweiten Spannungsschwellwert Us2 unterschreiten. Dann wird am Ausgang 808 des dritten Komparators 806 ein logisches 1-Signal ausgegeben. Das dem dritten Komparator 806 nachgeschaltete dritte Halteglied 812 speichert das Ausgangssignal des dritten Komparators 806 für eine vorbestimmte Haltezeit. Der zweite Spannungsschwellwert Us2 kann so groß sein wie der erste Spannungsschwellwert Us1 (also beispielsweise 60% der Nennspannung der ersten HGÜ-Leitung 24 entsprechen).

Im mittleren Teil der Figur 8 ist ein zweiter Schaltungsteil der zweiten Logikschaltung 800 dargestellt. Dieser zweite Schaltungsteil dient zum Erkennen, ob bei dem durch die HGÜ-Leitung fließenden Strom eine Stromrichtungsumkehr stattfindet. Dazu weist der zweite Schaltungsteil einen vierten Komparator 826 sowie einen fünften Komparator 828 auf. Sowohl an einen Eingang 830 des vierten Komparators 826 als auch an einen Eingang 832 des fünften Komparators 828 werden die Gleichstrommesswerte Im angelegt. Der vierte Komparator 826 gibt an seinem Ausgang 836 ein logisches 1-Signal aus, sobald die Gleichstrommesswerte Im einen dritten Stromschwellwert Is3 überschreiten. Der fünfte Komparator 828 gibt an seinem Ausgang 840 dann ein logisches 1-Signal aus, sobald die Gleichstrommesswerte einen vierten Stromschwellwert Is4 unterschreiten. Dieser vierte Stromschwellwert Is4 ist ein negativer Stromschwellwert. Der dritte Stromschwellwert Is3 ist ein positiver Stromschwellwert. Durch diese beiden Vergleiche kann erkannt werden, wenn innerhalb einer zweiten Zeitspanne die Gleichstrommesswerte ihr Vorzeichen ändern (also sich beispielsweise von einem negativen Gleichstrommesswert zu einem positiven Gleichstrommesswert verändern). Die zweite Zeitspanne wird durch ein viertes Halteglied 842 und/oder ein fünftes Halteglied 844 realisiert. Dabei braucht nur eines der beiden Halteglieder 842, 844 vorhanden zu sein. Beispielsweise braucht nur das fünfte Halteglied 844 vorhanden zu sein, das vierte Halteglied 842 kann optional sein. Selbstverständlich können aber auch beide Halteglieder 842, 844 vorhanden sein. Der Ausgang 836 des vierten Komparators 826 ist über das vierte Halteglied 842 mit einem zweiten Eingang 846 des zweiten UND-Glieds 820 elektrisch verbunden. Der Ausgang 840 des fünften Komparators 828 ist über das fünfte Halteglied 844 mit einem dritten Eingang 850 des zweiten UND-Glieds 820 elektrisch verbunden. Der dritte Stromschwellwert Is3 kann beispielsweise 10% des Nennstromes der ersten HGÜ-Leitung 24 entsprechen. Der vierte Stromschwellwert Is4 kann beispielsweise minus 10% des Nennstromes der ersten HGÜ-Leitung 24 entsprechen.

Im unteren Teil der Figur 8 ist ein dritter Schaltungsteil der zweiten Logikschaltung 800 dargestellt. Mit diesem optionalen dritten Schaltungsteil wird erkannt, ob der Betrag der zeitlichen Änderung der Gleichstrommesswerte dIm/dt einen vorbestimmten ersten Stromänderungsschwellwert SW1 überschreitet. Dazu weist der dritte Schaltungsteil der zweiten Logikschaltung 800 ein Tiefpassfilter 856, einen sechsten Komparator 858 sowie ein sechstes Halteglied 860 auf. Die erste zeitliche Ableitung dIm/dt der Gleichstrommesswerte Im (bei denen es sich um die gleichen Gleichstrommesswerte Im handelt, die im zweiten Schaltungsteil der zweiten Logikschaltung 800 ausgewertet worden sind) werden einem Eingang 862 des Tiefpassfilters 856 zugeführt. Das Tiefpassfilter 856 entfernt störende hochfrequente Anteile in der ersten zeitlichen Ableitung dIm/dt der Gleichstrommesswerte Im, wie sie beispielsweise durch Rauscheffekte entstehen können. Ein Ausgang 864 des Tiefpassfilters 856 ist über den sechsten Komparator 858 und das sechste Halteglied 860 mit einem vierten Eingang 866 des zweiten UND-Glieds 820 verbunden. Der sechste Komparator 858 erkennt, wenn der Betrag der zeitlichen Änderung der Gleichstrommesswerte |dIm/dt| den vorbestimmten ersten Stromänderungsschwellwert SW1 überschreitet. Das sechste Halteglied 860 speichert für eine vorbestimmte Zeitspanne den an dem Ausgang des sechsten Komparators 858 ausgegebenen Wert zwischen. Bei dem Tiefpassfilter 856 kann es sich beispielsweise um einen Butterworth-Filter dritter Ordnung handeln. Das Tiefpassfilter 856 kann beispielsweise eine Grenzfrequenz von 1 kHz aufweisen. Die in den Figuren 7 und 8 dargestellten Halteglieder können jeweils eine vorbestimmte Haltedauer von beispielsweise 100 ms aufweisen; diese Haltedauern bestimmen die Länge der ersten Zeitspanne und der zweiten Zeitspanne. Die erste Zeitspanne und die zweite Zeitspanne können beispielsweise jeweils 100 ms betragen.

Sobald gleichzeitig am ersten Eingang 816, am zweiten Eingang 846, am dritten Eingang 850 und am vierten Eingang 866 des zweiten UND-Glieds 820 ein logisches 1-Signal anliegt, wird am Ausgang 822 des UND-Glieds 820 das zweite Auslösesignal A2 ausgegeben. Das zweite Auslösesignal A2 wird also dann ausgegeben, wenn innerhalb einer vorbestimmten zweiten Zeitspanne sowohl die Gleichspannungsmesswerte Um den vorbestimmten zweiten Spannungsschwellwert Us2 unterschreiten, die Gleichstrommesswerte Im ihr Vorzeichen ändern (weil der durch den Gleichspannungsleistungsschalter fließende Gleichstrom eine Stromrichtungsumkehr aufweist) und die zeitliche Änderung der Gleichstrommesswerte den vorbestimmten ersten Stromänderungsschwellwert SW1 überschreiten. Mit Hilfe dieser drei Kriterien wird ein Fehler an der HGÜ-Leitung folgendermaßen erkannt: Aufgrund des Fehlers (Kurzschlusses) bricht die Spannung ein, so dass die Gleichspannungsmesswerte kleiner werden. Gleichzeitig bzw. innerhalb der zweiten Zeitspanne ändert der Gleichstrom in der HGÜ-Leitung seine Richtung, weil aufgrund des Kurzschlusses an der HGÜ-Leitung der jeweilige Stromrichter der betroffenen HGÜ-Station nicht mehr (wie beabsichtigt) Strom aus der HGÜ-Leitung entnimmt, sondern (ungewollt) aufgrund des Kurzschlusses an der HGÜ-Leitung Strom in die HGÜ-Leitung einspeist. Dadurch kommt die Stromrichtungsumkehr beim Gleichspannungsleistungsschalter zustande. Schließlich muss die Stromänderung innerhalb der zweiten Zeitspanne auch noch mit einer Mindestgeschwindigkeit stattfinden, damit ein Fehler an der HGÜ-Leitung erkannt wird. Das bedeutet, der Gradient di/dt muss den ersten Stromänderungsschwellwert SW1 überschreiten. So werden schnelle Stromänderungen aufgrund eines Kurzschlusses unterschieden von langsamen Stromänderungen, die beispielsweise aufgrund einer normalen Laständerung an dem Multi-Terminal-HGÜ-System auftreten können. Der zweite Spannungsschwellwert Us2 kann bei diesem Ausführungsbeispiel so groß sein wie der erste Spannungsschwellwert Us1 der ersten Logikschaltung 700 nach Figur 7.

Sobald das zweite Auslösesignal A2 ausgegeben wird (d. h. als zweites Auslösesignal ein logisches 1-Signal am Ausgang des UND-Glieds 820 ausgegeben wird), wird auch das (Gesamt-)Auslösesignal A (als logisches 1-Signal) ausgegeben (vgl. Figur 10).

In Figur 9 ist ein Ausführungsbeispiel einer dritten optionalen Logikschaltung 900 dargestellt. Diese dritte Logikschaltung 900 wertet die Gleichstrommesswerte Im aus und erzeugt als Ergebnis der Auswertung ein drittes Auslösesignal A3. Die dritte Logikschaltung realisiert eine reine Überstromerkennung.

Die Gleichstrommesswerte Im werden einem Eingang 904 eines siebenten Komparators 906 zugeführt. Sobald die Gleichstrommesswerte Im einen vorbestimmten zweiten Stromschwellwert Is2 überschreiten, wird an einem Ausgang 908 des siebenten Komparators 906 das dritte Auslösesignal A3 ausgegeben (d. h. das dritte Auslösesignal wird als ein logisches 1-Signal ausgegeben). Der zweite vorbestimmte Stromschwellwert Is2 ist dabei vorteilhafterweise größer als der erste vorbestimmte Stromschwellwert Is1. Optional ist außerdem der zweite vorbestimmte Stromschwellwert Is2 größer als der dritte vorbestimmte Stromschwellwert Is3. Dis hat zur Folge, dass das dritte Auslösesignal später erzeugt wird als das erste Auslösesignal A1 oder das zweite Auslösesignal A2. Das dritte Auslösesignal stellt somit ein Reserve-Auslösesignal dar, das nur dann erzeugt wird, wenn - beispielsweise aufgrund eines Fehlers in den Logikschaltungen - das erste Auslösesignal A1 und das zweite Auslösesignal A2 nicht erzeugt werden. Beispielsweise kann der vorbestimmte zweite Stromschwellwert so groß gewählt werden wie der Bemessungsausschaltstrom des zugeordneten Gleichstromleistungsschalters. Dadurch wird ein Schutz des Gleichstromleistungsschalters erreicht, weil der Gleichstromleistungsschalter immer rechtzeitig abgeschaltet wird, bevor er durch zu große Fehlerströme beschädigt werden würde. Die dritte Logikschaltung realisiert also einen Back-up-Schutz für den jeweiligen Gleichstromleistungsschalter. Dieser Back-up-Schutz verhindert, dass die durch den Gleichstromleistungsschalter fließenden Gleichströme so große Werte annehmen können, dass der Gleichstromleistungsschalter dadurch beschädigt werden würde. Der zweite Stromschwellwert Is2 kann beispielsweise 150% des Nennstromes der ersten HGÜ-Leitung 24 entsprechen.

In Figur 10 ist ein Ausführungsbeispiel einer vierten Logikschaltung 1000 dargestellt. Diese vierte Logikschaltung 1000 besteht aus einem ODER-Glied 1002. Dieses ODER-Glied 1002 gibt an seinem Ausgang 1004 dann das (Gesamt-)Auslösesignal A als logisches 1-Signal aus, wenn entweder das erste Auslösesignal A1 oder das zweite Auslösesignal A2 oder das dritte Auslösesignal A3 (oder mehrere der Auslösesignale A1, A2, A3) als logisches 1-Signal an den Eingängen des ODER-Glieds 1002 anliegt.

Auf das Auslösesignal A hin unterbricht der Gleichstromleistungsschalter den Stromfluss zwischen der Hochspannungsgleichstromübertragungsstation und dem Fehlerort an der Hochspannungsgleichstromübertragungsleitung. Der Gleichstromleistungsschalter schaltet also auf das Auslösesignal A hin den zum Fehlerort fließenden Strom ab. Die in den Figuren 7, 8 und 9 dargestellten Logikschaltungen können auch jeweils eigenständig zur Erzeugung des Auslösesignals A genutzt werden. Beispielsweise kann die in Figur 7 dargestellte erste Logikschaltung 700 (ohne Mitwirkung der zweiten Logikschaltung 800 und der dritten Logikschaltung 900) das Auslösesignal A erzeugen. Das erste Auslösesignal A1 wird dann als (Gesamt-)Auslösesignal A ausgegeben.

Bei dem beschriebenen Verfahren und der beschriebenen Anordnung ist besonders vorteilhaft, dass lediglich an einem einzigen Spannungsmessort die Gleichspannungsmesswerte gemessen zu werden brauchen und an einem einzigen Strommessort die Gleichstrommesswerte gemessen zu werden brauchen, um ein Auslösesignal für den jeweils zugeordneten Gleichstromleistungsschalter zu erzeugen. Dadurch wird insbesondere keine schnelle Kommunikationsinfrastruktur zwischen verschiedenen Abschnitten des Multi-Terminal-HGÜ-Systems benötigt, wie sie beispielsweise beim Einsatz eines Leitungsdifferentialschutzes notwendig wäre.

Es wurde ein Verfahren und eine Anordnung beschrieben, mit denen ein selektiver Schutz eines Multi-Terminal-HGÜ-Systems realisiert werden kann. Dabei können vorteilhafterweise die Parameter (beispielsweise Us1, Us2, Is1, Is3, Is4 und/oder SW1) so gewählt werden, dass das erste Auslösesignal A1 und das zweite Auslösesignal A2 schnell nach Auftreten eines Fehlers (d.h. früh) erzeugt werden, das dritte Auslösesignal A3 aber langsamer (d.h. später) nach Auftreten des Fehlers erzeugt wird. Damit wird verhindert, dass mehrere Gleichstromleistungsschalter des Multi-Terminal-HGÜ-Systems nahezu gleichzeitig aufgrund des dritten Auslösesignals A3 auslösen und damit große Teile des Multi-Terminal-HGÜ-Systems (oder sogar das gesamte Multi-Terminal-HGÜ-System) unselektiv abgeschaltet wird. Vielmehr können damit vorteilhafterweise das erste Auslösesignal A1 und das zweite Auslösesignal A2 nur dann erzeugt werden, wenn ein Fehler nah am Ort der Spannungsmessung/Strommessung auftritt, wohingegen ein weiter entfernter Fehler keine Erzeugung des ersten Auslösesignals A1 und des zweiten Auslösesignals A2 zur Folge hat. Das Multi-Terminal-HGÜ-System weist insbesondere HGÜ-Stationen mit modularen Multilevelstromrichtern und Modulen in Halbbrückentopologie auf. Weiterhin weist das HGÜ-System vorzugsweise unidirektionale leistungselektronische Gleichstromleistungsschalter auf. Ein solches HGÜ-System kann vorzugsweise mittels eines Freileitungsnetzes aus EGÜ-Leitungen realisiert werden. Mit dem beschriebenen Verfahren und der beschriebenen Anordnung können gleichstromseitige Leitungsfehler (also Fehler an den HGÜ-Leitungen) schnell, selektiv und sicher geklärt werden. Nachdem derartige Fehler mittels der beschriebenen Logikschaltungen erkannt worden sind, wird ein Auslösesignal für den jeweiligen Gleichstromleistungsschalter ausgegeben, woraufhin der Gleichstromleistungsschalter den Stromfluss zu dem Fehlerort unterbricht. Dabei ist besonders vorteilhaft, dass die fehlerbehafteten HGÜ-Leitungen selektiv abgeschaltet werden können, wohingegen die nicht fehlerbehafteten HGÜ-Leitungen weiter betrieben werden können.

Mittels der beschriebenen drei Logikschaltungen können parallel drei verschiedene Auswertungen an den Gleichspannungsmesswerten Um und den Gleichstrommesswerten Im vorgenommen werden. Es werden also drei unterschiedliche Detektionskriterien ausgewertet. Sobald nur eines der Detektionskriterien als gegeben erkannt wird, führt dies zu einer Gesamtauslösung des Schutzes (das Gesamt-Auslösesignal A wird als logisches 1-Signal ausgegeben). Als ein erstes Detektionskriterium kann eine reine Überstromerkennung (vgl. Figur 9) eingesetzt werden. Dieses Detektionskriterium ermöglicht durch die unselektive Auslösung bei der Überschreitung eines fixen Stromschwellwerts (des zweiten Stromschwellwerts Is2) einen inhärenten Back-up-Schutz für den Gleichstromleistungsschalter. Die Wahl des zweiten Stromschwellwerts entsprechend des Bemessungsausschaltstroms des Gleichstromleistungsschalters ermöglicht die Realisierung eines Selbstschutzes des Gleichstromleistungsschalters.

Als weiteres Detektionskriteriums wird eine Uberstromerkennung bei einem reduzierten Stromschwellwert mit einer zusätzlichen Unterspannungserkennung kombiniert (vgl. die erste Logikschaltung in Figur 7). Dieses Detektionskriterium ermöglicht eine frühere Fehlerdetektion (verglichen mit der reinen Überstromerkennung nach Figur 9). Die Selektivität wird dabei über den ersten Stromschwellwert Is1 sowie über den ersten Spannungsschwellwert Us1 erreicht.

Beim dritten Detektionskriterium wird eine Überstromerkennung bei einem weiter reduzierten Stromschwellwert Is3 mit einer Stromflussumkehrerkennung kombiniert (vgl. zweite Logikschaltung 800 in Figur 8). Dieses Detektionskriterium ermöglicht eine Fehlerdetektion bei einer Stromflussumkehrung bereits nahe des Stromnulldurchgangs (vorteilhafterweise kann der dritte Stromschwellwert Is3 entsprechend klein gewählt werden). Die Selektivität dieses Detektionskriteriums wird über den dritten Stromschwellwert Is3, die Spannungsuntergrenze (Unterspannungsgrenze, zweiter Spannungsschwellwert Us2) und den Stromänderungsschwellwert SW1 (minimale Stromsteilheit di/dt) erreicht.

Die Anordnung und das Verfahren vereinigen die Vorteile einer schnellen und gleichzeitig selektiven Fehlererkennung mit geringen Anforderungen an die Hardware der Schutztechnik (es sind lediglich Vergleiche von Messwerten und die Bestimmung von Gradienten notwendig). Durch den integrierten Back-up-Schutz ist das Schutzkonzept zudem sicher. Die schnelle Fehlerdetektion ermöglicht eine Reduzierung des Bemessungsausschaltstroms der Gleichspannungsleistungsschalter. Dadurch sind kleinere Gleichspannungsleistungsschalter einsetzbar, was Kostenvorteile mit sich bringt. Zusätzlich wird insbesondere keine schnelle Kommunikationsinfrastruktur benötigt, um die Leitungsfehler an den verschiedenen HGÜ-Leitungen selektiv zu erkennen. Mit dem beschriebenen Verfahren und der beschriebenen Anordnung ist es möglich, einen Fehlerstrom sehr schnell zu unterbrechen, insbesondere innerhalb weniger Millisekunden.

Das beschriebene Verfahren und die beschriebene Anordnung basieren auf eine Überstromerkennung, wobei zusätzliche Auslösekriterien (Unterspannungserkennung und Stromflussumkehrungserkennung) eingesetzt werden, um die Stromschwellwerte klein wählen zu können. Als Messgrößen werden lediglich Messgrößen von Strom und Spannung am zugehörigen Leitungsabgang der HGÜ-Leitung (beispielsweise direkt am Gleichstromleistungsschalter) benötigt. Das beschriebene Verfahren und die beschriebene Anordnung können vorzugsweise für die Realisierung von Multi-Terminal-HGÜ-Verbindungen eingesetzt werden.

Sie können größtenteils schnell und kostengünstig realisiert werden.

Die eingangs beschriebenen bekannten Schutzkonzepte können für Hybrid-Gleichstromleistungsschalter eingesetzt werden - das sind Leistungsschalter, die sowohl mechanische als auch elektronische Schaltelemente aufweisen. Bei dem beschriebenen neuen Verfahren und der beschriebenen neuen Anordnung können dagegen vorteilhafterweise (rein) leistungselektronische Gleichstromleistungsschalter eingesetzt werden, die schneller schalten können als Hybrid-Gleichstromleistungsschalter. Es ist aber grundsätzlich auch möglich, bei dem neuen Verfahren und der neuen Anordnung mechanische Gleichstromleistungsschalter oder Hybrid-Gleichstromleistungsschalter einzusetzen.

## Patentansprüche

1. Verfahren zum Erzeugen eines Auslösesignals (A) für einen Gleichstromleistungsschalter (22), der zwischen eine Hochspannungsgleichstromquelle (11) und eine Hochspannungsgleichstromübertragungsleitung (24) geschaltet ist, wobei bei dem Verfahren
- eine an einem Spannungsmessort (218) an der Hochspannungsgleichstromübertragungsleitung (24) anliegende Spannung unter Gewinnung von Gleichspannungsmesswerten (Um) gemessen wird,
- ein an einem Strommessort (204) durch die Hochspannungsgleichstromübertragungsleitung (24) fließender Strom unter Gewinnung von Gleichstrommesswerten (Im) gemessen wird, und
- durch Auswertung der Gleichspannungsmesswerte (Um) und der Gleichstrommesswerte (Im) ein an der Hochspannungsgleichstromübertragungsleitung vorliegender Fehler (230) erkannt wird und daraufhin das Auslösesignal (A) für den Gleichstromleistungsschalter (22) erzeugt wird,
**dadurch gekennzeichnet, dass** das Auslösesignal (A) für den Gleichstromleistungsschalter (22) erzeugt wird,
- wenn innerhalb einer vorbestimmten zweiten Zeitspanne die Gleichspannungsmesswerte (Um) einen vorbestimmten zweiten Spannungsschwellwert (Us2) unterschreiten und die Gleichstrommesswerte (Im) ihr Vorzeichen ändern, oder
- wenn innerhalb der vorbestimmten zweiten Zeitspanne die Gleichspannungsmesswerte (Um) den vorbestimmten zweiten Spannungsschwellwert (Us2) unterschreiten, die Gleichstrommesswerte (Im) ihr Vorzeichen ändern und der Betrag der zeitlichen Änderung der Gleichstrommesswerte (Im) einen vorbestimmten ersten Stromänderungsschwellwert (SW1) überschreitet.

2. Verfahren nach Anspruch 1,
**dadurch gekennzeichnet, dass**
- das Auslösesignal (A) für den Gleichstromleistungsschalter (22) auch dann erzeugt wird,
- wenn innerhalb einer vorbestimmten ersten Zeitspanne die Gleichspannungsmesswerte (Um) einen vorbestimmten ersten Spannungsschwellwert (Us1) unterschreiten und die Gleichstrommesswerte (Im) einen vorbestimmten ersten Stromschwellwert (Is1) überschreiten.

3. Verfahren nach Anspruch 2,
**dadurch gekennzeichnet, dass**
- das Auslösesignal (A) auch dann erzeugt wird, wenn die Gleichstrommesswerte (Im) einen vorbestimmten zweiten Stromschwellwert (Is2) überschreiten.

4. Verfahren nach Anspruch 3,
**dadurch gekennzeichnet, dass**
- der erste Stromschwellwert (Is1) kleiner ist als der zweite Stromschwellwert (Is2).

5. Verfahren nach einem der vorhergehenden Ansprüche,
**dadurch gekennzeichnet , dass**
- der Gleichstromleistungsschalter (22) ein leistungselektronischer Gleichstromleistungsschalter (22) oder ein Hybrid-Gleichstromleistungsschalter ist.

6. Verfahren nach einem der vorhergehenden Ansprüche,
**dadurch gekennzeichnet, dass**
- die Hochspannungsgleichstromquelle (11) einen modularen Multilevelstromrichter (400) aufweist, welcher eine Vielzahl von gleichartigen Modulen (1_1 ... 6_n) aufweist.

7. Verfahren nach Anspruch 6,
**dadurch gekennzeichnet , dass**
- jedes Modul (1_1 ... 6_n) mindestens zwei elektronische Schaltelemente (502, 506) und einen elektrischen Energiespeicher (510) aufweist.

8. Anordnung
- mit einem Gleichstromleistungsschalter (22), der zwischen eine Hochspannungsgleichstromquelle (11) und eine Hochspannungsgleichstromübertragungsleitung (24) geschaltet ist,
- mit einem Spannungssensor (214) zum Messen einer an einem Spannungsmessort (218) an der Hochspannungsgleichstromübertragungsleitung (24) anliegenden Spannung unter Gewinnung von Gleichspannungsmesswerten (Um),
- mit einem Stromsensor (202) zum Messen eines an einem Strommessort (204) durch die Hochspannungsgleichstromübertragungsleitung (24) fließenden Stroms unter Gewinnung von Gleichstrommesswerten (Im), und
- mit einer Steuereinrichtung (210), welche dazu eingerichtet ist, durch Auswertung der Gleichspannungsmesswerte (Um) und der Gleichstrommesswerte (Im) einen an der Hochspannungsgleichstromübertragungsleitung (24) vorliegenden Fehler (230) zu erkennen und daraufhin ein Auslösesignal (A) für den Gleichstromleistungsschalter (22) zu erzeugen,
**dadurch gekennzeichnet, dass** die Steuereinrichtung (210) dazu eingerichtet ist, das Auslösesignal (A) für den Gleichstromleistungsschalter (22) zu erzeugen,
- wenn innerhalb einer vorbestimmten zweiten Zeitspanne die Gleichspannungsmesswerte (Um) einen vorbestimmten zweiten Spannungsschwellwert (Us2) unterschreiten und die Gleichstrommesswerte (Im) ihr Vorzeichen ändern, oder
- wenn innerhalb der vorbestimmten zweiten Zeitspanne die Gleichspannungsmesswerte (Um) den vorbestimmten zweiten Spannungsschwellwert (Us2) unterschreiten, die Gleichstrommesswerte (Im) ihr Vorzeichen ändern und der Betrag der zeitlichen Änderung der Gleichstrommesswerte (Im) einen vorbestimmten ersten Stromänderungsschwellwert (SW1) überschreitet.

9. Anordnung nach Anspruch 8,
**dadurch gekennzeichnet, dass**
- die Steuereinrichtung (210) dazu eingerichtet ist, das Auslösesignal (A) für den Gleichstromleistungsschalter (22) auch dann zu erzeugen,
- wenn innerhalb einer vorbestimmten ersten Zeitspanne die Gleichspannungsmesswerte (Um) einen vorbestimmten ersten Spannungsschwellwert (Us1) unterschreiten und die Gleichstrommesswerte (Im) einen vorbestimmten ersten Stromschwellwert (Is1) überschreiten.

10. Anordnung nach Anspruch 9,
**dadurch gekennzeichnet, dass**
- die Steuereinrichtung (210) dazu eingerichtet ist, das Auslösesignal (A) für den Gleichstromleistungsschalter (22) auch dann zu erzeugen, wenn die Gleichstrommesswerte (Im) einen vorbestimmten zweiten Stromschwellwert (Is2) überschreiten.

11. Anordnung nach Anspruch 10,
**dadurch gekennzeichnet, dass**
- der erste Stromschwellwert (Is1) kleiner ist als der zweite Stromschwellwert (Is2).

12. Anordnung nach einem der Ansprüche 8 bis 11,
**dadurch gekennzeichnet, dass**
- der Gleichstromleistungsschalter (22) ein leistungselektronischer Gleichstromleistungsschalter (22) oder ein Hybrid-Gleichstromleistungsschalter ist.

13. Anordnung nach einem der Ansprüche 8 bis 12,
**dadurch gekennzeichnet, dass**
- der Gleichstromleistungsschalter (22) ein unidirektionaler Gleichstromleistungsschalter (22) ist.

14. Anordnung nach einem der Ansprüche 8 bis 13,
**dadurch gekennzeichnet, dass**
- die Hochspannungsgleichstromquelle (11) einen modularen Multilevelstromrichter (400) aufweist, welcher eine Vielzahl von gleichartigen Modulen (1_1 ... 6_n) aufweist.

15. Anordnung nach einem der Ansprüche 8 bis 14,
**dadurch gekennzeichnet, dass**
- jedes Modul (1_1 ... 6_n) mindestens zwei elektronische Schaltelemente (502, 506) und einen elektrischen Energiespeicher (510) aufweist.

16. Anordnung nach einem der Ansprüche 8 bis 15,
**dadurch gekennzeichnet, dass**
- die Hochspannungsgleichstromquelle (11) zwei modulare Multilevelstromrichter (302, 304) aufweist, deren Gleichstromanschlüsse (PA1, NA1, PA2, NA2) in Reihe geschaltet sind.

## Claims

1. Method for generating a tripping signal (A) for a DC circuit breaker (22), which is connected between a high-voltage DC source (11) and a high-voltage DC transmission line (24), wherein in the method
- a voltage present on the high-voltage DC transmission line (24) at a voltage measuring point (218) is measured with DC voltage measurement values (Um) being obtained,
- a current flowing through the high-voltage DC transmission line (24) at a current measuring point (204) is measured with DC measurement values (Im) being obtained, and
- by evaluating the DC voltage measurement values (Um) and the DC measurement values (Im) a fault (230) present on the high-voltage DC transmission line is identified and thereupon the tripping signal (A) for the DC circuit breaker (22) is generated,
**characterized in that**
the tripping signal (A) for the DC circuit breaker (22) is generated
- if within a predetermined second period of time the DC voltage measurement values (Um) fall below a predetermined second voltage threshold value (Us2) and the DC measurement values (Im) change their sign or
- if within the predetermined second period of time the DC voltage measurement values (Um) fall below the predetermined second voltage threshold value (Us2), the DC measurement values (Im) change their sign and the absolute value of the temporal change in the DC measurement values (Im) exceeds a predetermined first current change threshold value (SW1).

2. Method according to Claim 1,
**characterized in that**
- the tripping signal (A) for the DC circuit breaker (22) is also then generated
- if within a predetermined first period of time the DC voltage measurement values (Um) fall below a predetermined first voltage threshold value (Us1) and the DC measurement values (Im) exceed a predetermined first current threshold value (Is1).

3. Method according to Claim 2,
**characterized in that**
- the tripping signal (A) is also then generated if the DC measurement values (Im) exceed a predetermined second current threshold value (Is2).

4. Method according to Claim 3,
**characterized in that**
- the first current threshold value (Is1) is lower than the second current threshold value (Is2).

5. Method according to one of the preceding claims,
**characterized in that**
- the DC circuit breaker (22) is a power electronic DC circuit breaker (22) or a hybrid DC circuit breaker.

6. Method according to one of the preceding claims,
**characterized in that**
- the high-voltage DC source (11) has a modular multilevel power converter (400) which has a multiplicity of identical modules (1_1 ... 6_n).

7. Method according to Claim 6,
**characterized in that**
- each module (1_1 ... 6_n) has at least two electronic switching elements (502, 506) and an electrical energy store (510) .

8. Arrangement
- having a DC circuit breaker (22), which is connected between a high-voltage DC source (11) and a high-voltage DC transmission line (24),
- having a voltage sensor (214) for measuring a voltage present on the high-voltage DC transmission line (24) at a voltage measuring point (218) with DC voltage measurement values (Um) being obtained,
- having a current sensor (202) for measuring a current flowing through the high-voltage DC transmission line (24) at a current measuring point (204) with DC measurement values (Im) being obtained, and
- having a control device (210), which is configured, by evaluating the DC voltage measurement values (Um) and the DC measurement values (Im), to identify a fault (230) present on the high-voltage DC transmission line (24) and thereupon to generate a tripping signal (A) for the DC circuit breaker (22),
**characterized in that**
the control device (210) is configured to generate the tripping signal (A) for the DC circuit breaker (22)
- if within a predetermined second period of time the DC voltage measurement values (Um) fall below a predetermined second voltage threshold value (Us2) and the DC measurement values (Im) change their sign or
- if within the predetermined second period of time the DC voltage measurement values (Um) fall below the predetermined second voltage threshold value (Us2), the DC measurement values (Im) change their sign and the absolute value of the temporal change in the DC measurement values (Im) exceeds a predetermined first current change threshold value (SW1).

9. Arrangement according to Claim 8,
**characterized in that**
- the control device (210) is configured to also then generate the tripping signal (A) for the DC circuit breaker (22)
- if within a predetermined first period of time the DC voltage measurement values (Um) fall below a predetermined first voltage threshold value (Us1) and the DC measurement values (Im) exceed a predetermined first current threshold value (Is1).

10. Arrangement according to Claim 9,
**characterized in that**
- the control device (210) is configured to also then generate the tripping signal (A) for the DC circuit breaker (22) if the DC measurement values (Im) exceed a predetermined second current threshold value (Is2).

11. Arrangement according to Claim 10,
**characterized in that**
- the first current threshold value (Is1) is lower than the second current threshold value (Is2).

12. Arrangement according to one of Claims 8 to 11,
**characterized in that**
- the DC circuit breaker (22) is a power electronic DC circuit breaker (22) or a hybrid DC circuit breaker.

13. Arrangement according to one of Claims 8 to 12,
**characterized in that**
- the DC circuit breaker (22) is a unidirectional DC circuit breaker (22).

14. Arrangement according to one of Claims 8 to 13,
**characterized in that**
- the high-voltage DC source (11) has a modular multilevel power converter (400) which has a multiplicity of identical modules (1_1 ... 6_n).

15. Arrangement according to one of Claims 8 to 14,
**characterized in that**
- each module (1_1 ... 6_n) has at least two electronic switching elements (502, 506) and an electrical energy store (510) .

16. Arrangement according to one of Claims 8 to 15,
**characterized in that**
- the high-voltage DC source (11) has two modular multilevel power converters (302, 304) whose DC connections (PA1, NA1, PA2, NA2) are connected in series.

## Revendications

1. Procédé de production d'un signal (A) de déclenchement d'un interrupteur (22) de puissance à courant continu, qui est monté entre une source (11) de courant continu à haute tension et une ligne (24) de transport de courant continu à haute tension, procédé dans lequel
- on mesure une tension s'appliquant à un emplacement (218) de mesure de la tension sur la ligne (24) de transport de courant continu à haute tension, en obtenant des valeurs (Um) de mesure de tension continue,
- on mesure un courant passant à un emplacement (204) de mesure du courant dans la ligne (24) de transport de courant continu à haute tension, en obtenant des valeurs (Im) de mesure de courant continu, et
- en exploitant les valeurs (Um) de mesure de tension continue et les valeurs (Im) de mesure de courant continu, on détecte un défaut (230) présent sur la ligne de transport de courant continu à haute tension et on produit ensuite le signal (A) de déclenchement de l'interrupteur (22) de puissance à courant continu,
**caractérisé en ce qu'**
on produit le signal (A) de déclenchement de l'interrupteur (22) de puissance à courant continu,
- si, dans un deuxième laps de temps défini à l'avance, les valeurs (Um) de mesure de tension continue sont inférieures à une deuxième valeur (Us2) de seuil de tension définie à l'avance et si les valeurs (Im) de mesure de courant continu modifient leurs signes ou
- si, dans le deuxième laps de temps défini à l'avance, les valeurs (Um) de mesure de tension continue sont inférieures à la deuxième valeur (Us2) de seuil de tension définie à l'avance, les valeurs (Im) de mesure de courant continu modifient leurs signes et la valeur absolue de la modification en fonction du temps des valeurs (Im) de mesure de courant continu dépasse une première valeur (SW1) de seuil de modification de courant définie à l'avance.

2. Procédé suivant la revendication 1,
**caractérisé en ce qu'**
- on produit le signal (A) de déclenchement de l'interrupteur (22) de puissance à courant continu, également
- lorsque, dans un premier laps de temps défini à l'avance, les valeurs (Um) de tension continue sont inférieures à une première valeur (Us1) de seuil de tension définie à l'avance et les valeurs (Im) de mesure de courant continu dépassent une première valeur (Is1) de seuil de courant définie à l'avance.

3. Procédé suivant la revendication 2,
**caractérisé en ce qu'**
- on produit également le signal (A) de déclenchement, lorsque les valeurs (Im) de mesure de courant continu dépassent une deuxième valeur (Is2) de seuil de courant définie à l'avance.

4. Procédé suivant la revendication 3,
**caractérisé en ce que**
- la première valeur (Is1) de seuil de courant est plus petite que la deuxième valeur (Is2) de seuil de courant.

5. Procédé suivant l'une des revendications précédentes,
**caractérisé en ce que**
- l'interrupteur (22) de puissance à courant continu est un interrupteur (22) de puissance à courant continu de l'électronique de puissance ou un interrupteur de puissance à courant continu hybride.

6. Procédé suivant l'une des revendications précédentes,
**caractérisé en ce que**
- la source (11) de courant continu à haute tension a un convertisseur (400) modulaire à plusieurs niveaux, qui a une pluralité de modules (1_1 ... 6_n) de même type.

7. Procédé suivant la revendication 6,
**caractérisé en ce que**
- chaque module (1_1 ... 6_n) a au moins deux éléments (502, 506) électroniques de coupure et un accumulateur (510) d'énergie électrique.

8. Montage
- comprenant un interrupteur (22) de puissance à courant continu, qui est monté entre une source (11) de courant continu à haute tension et une ligne (24) de transport de courant continu à haute tension,
- comprenant un capteur (214) de tension pour la mesure d'une tension s'appliquant à un emplacement (218) de mesure de la tension à la ligne (24) de transport de courant continu à haute tension, en obtenant des valeurs (Um) de mesure de tension continue,
- comprenant un capteur (202) de courant pour la mesure d'un courant passant en un emplacement (204) de mesure de courant dans la ligne (24) de transport de courant continu à haute tension, en obtenant des valeurs (Im) de mesure de courant continu, et
- comprenant un dispositif (210) de commande, qui est conçu pour détecter, en exploitant les valeurs (Um) de mesure de tension continue et les valeurs (Im) de mesure de courant continu, un défaut (230) présent sur la ligne (24) de transport de courant continu à haute tension et pour produire ensuite un signal (A) de déclenchement de l'interrupteur (22) de puissance à courant continu,
**caractérisé en ce que**
le dispositif (210) de commande est conçu pour produire le signal (A) de déclenchement de l'interrupteur (22) de puissance à courant continu,
- si, dans un deuxième laps de temps défini à l'avance, les valeurs (Um) de mesure de tension continue sont inférieures à une deuxième valeur (Us2) de seuil de tension définie à l'avance et si les valeurs (Im) de mesure de courant continu modifient leurs signes, ou
- si, dans le deuxième laps de temps défini à l'avance, les valeurs (Um) de mesure de tension continue sont inférieures à la deuxième valeur (Us2) de seuil de tension définie à l'avance, les valeurs (Im) de mesure de courant continu modifient leurs signes et la valeur absolue de la modification en fonction du temps des valeurs (Im) de mesure de courant continu dépasse une première valeur (SW1) de seuil de modification de courant définie à l'avance.

9. Montage suivant la revendication 8,
**caractérisé en ce que**
- le dispositif (210) de commande est conçu pour produire le signal (A) de déclenchement de l'interrupteur (22) de puissance à courant continu également
- lorsque, dans un premier laps de temps défini à l'avance, les valeurs (Um) de tension continue sont inférieures à une première valeur (Us1) de seuil de tension définie à l'avance et les valeurs (Im) de mesure de courant continu dépassent une première valeur (Is1) de seuil de courant définie à l'avance.

10. Montage suivant la revendication 9,
**caractérisé en ce que**
- le dispositif (210) de commande est conçu pour produire le signal (A) de déclenchement de l'interrupteur (22) de puissance à courant continu, également lorsque les valeurs (Im) de mesure de courant continu dépassent une deuxième valeur (Is2) de seuil de courant défini à l'avance.

11. Montage suivant la revendication 10,
**caractérisé en ce que**
- la première valeur (Is1) de seuil de courant est plus petite que la deuxième valeur (Is2) de seuil de courant.

12. Montage suivant l'une des revendications 8 à 11,
**caractérisé en ce que**
- l'interrupteur (22) de puissance à courant continu est un interrupteur (22) de puissance à courant continu de l'électronique de puissance ou un interrupteur de puissance à courant continu hybride.

13. Montage suivant l'une des revendications 8 à 12,
**caractérisé en ce que**
- l'interrupteur (22) de puissance à courant continu est un interrupteur (22) de puissance à courant continu unidirectionnel.

14. Montage suivant l'une des revendications 8 à 13,
**caractérisé en ce que**
- la source (11) de courant continu à haute tension a un convertisseur (400) modulaire à plusieurs niveaux, qui a une pluralité de modules (1_1 ... 6_n) de même type.

15. Montage suivant l'une des revendications 8 à 14,
**caractérisé en ce que**
- chaque module (1_1 ... 6_n) a au moins deux éléments (502, 506) électronique de coupure et un accumulateur (510) d'énergie électrique.

16. Montage suivant l'une des revendications 8 à 15,
**caractérisé en ce que**
- la source (11) de courant continu à haute tension a deux convertisseurs (302, 304) modulaires à plusieurs niveaux, dont les bornes (PA1, NA1, PA2, NA2) de courant continu sont montées en série.
